# EUROPEAN PATENT APPLICATION

(11) **EP 2 023 274 A1**
(43) Date of publication of application: **11.02.2009**
(21) Application number: 07743452.0
(22) Date of filing: 16.05.2007
(51) Int. Cl.: G06K 19/07

(54) **SEMICONDUCTOR DEVICE**

(30) Priority: 02.06.2006 JP 2006154323
(71) Applicant: Renesas Technology Corp., Tokyo 100-0004 (JP)
(72) Inventor: NISHIZAWA, Hirotaka, c/o RENESAS TECHMOLOGY CORP., Tokyo 100-0004 (JP); OSAKO, Junichiro, c/o RENESAS TECHNOLOGY CORP., Tokyo 100-0004 (JP); SHINOHARA, Minoru, c/o RENESAS EASTERN JAPAN SEMICONDUCTOR INC., Tokyo 163-1331 (JP); WADA, Tamaki, c/o RENESAS TECHNOLOGY CORP., Tokyo 100-0004 (JP); KATAYAMA, Kunihiro, c/o RENESAS TECHNOLOGY CORP., Tokyo 100-0004 (JP); SHIOTA, Shigemasa, c(o RENESAS TECHNOLOGY CORP., Tokyo 100-0004 (JP)
(74) Representative: Calderbank, Thomas Roger
(86) International application number: PCT/JP2007/060017
(87) International publication number: WO 2007/141999

(57) **Abstract**

A semiconductor device has operation modes selectable through the control by a second microcomputer (113). In a first mode, an operation of a memory controller (105) responding to a memory card command from a memory card interface terminal and an operation of a first microcomputer (106) responding to an IC card command from an IC card interface terminal are separately performed. In a second mode, the first microcomputer operates in response to the IC card command from the IC card interface terminal. In a third mode, the memory controller and the first microcomputer operate in response to an undefined IC card command from the IC card interface terminal. In a fourth mode, the memory controller and the first microcomputer operate in response to the memory card command from the memory card interface terminal. Convenience of the semiconductor device having an IC card function and a memory card function is improved.

## Description

### TECHNICAL FIELD

The present invention relates a semiconductor device having an IC (integrated Circuits) card function added with a memory card function and relates to, for example, a technique effectively applied to function expansion for an IC card module or an SIM (Subscriber Identity Module) card module.

### BACKGROUND ART

In Patent Document 1, there is a description about a multi-function memory card in which an SIM (Subscriber Identify Module) card unit is mounted on a card substrate of an MMC card (MultiMediaCard: registered trademark) standard together with a memory card unit. Connector terminals provided on the card substrate are arranged in two rows in a zigzag and imparted with compatibility with an MMC card and an SD card.

In Patent Document 2, there is a description about an IC card obtained by adding a flash memory and a contact terminal for accessing the flash memory to an IC card in which a microcomputer for IC card is mounted on a base card and a contact terminal for accessing the microcomputer for IC card is formed on the surface of the base card.

In Patent Document 3, an SIM card that is mounted with a microcomputer, a flash memory, and a controller chip and has a memory card function.

[Patent Document 1] International Publication No. 01/84490 Pamphlet
[Patent Document 2] JP-A-10-334205
[Patent Document 3] JP-A-2005-322109

### DISCLOSURE OF THE INVENTION

### PROBLEMS THAT THE INVENTION IS TO SOLVE

However, in the conventional techniques, operation modes that take into account association of mutual functions, inactivation of a part of functions, a reduction in power consumption of inactivated circuits, compatibility with existing cards, and the like in a semiconductor device having an IC card function added with a memory card function are not examined. The inventor has recognized that it is important, in improving convenience of the semiconductor device having the IC card function added with the memory card function, to make it possible to dynamically switch operation modes that can satisfy the forgoing.

It is an object of the present invention to improve convenience of a semiconductor device having an IC card function and a memory card function.

The above-mentioned object and other objects as well as new characteristics of the present invention will be apparent from the description of the specification and the accompanying drawings.

### MEANS FOR SOLVING THE PROBLEMS

Overviews of representative ones of inventions disclosed in this application are briefly explained below.

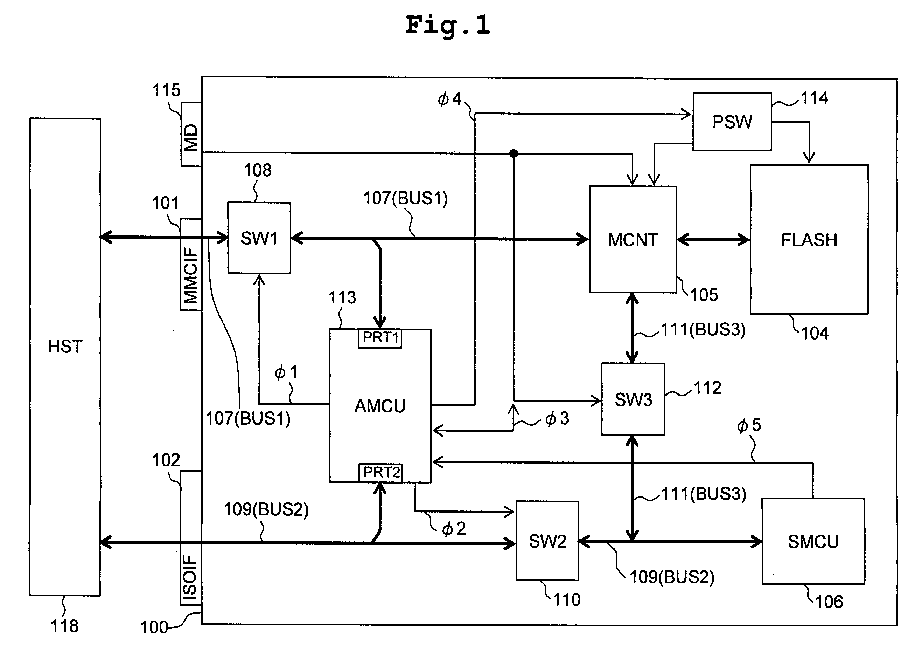

[1] <<Operation modes>> A first semiconductor device according to the present invention illustrated in Fig. 1 includes: an electrically rewritable nonvolatile memory; a memory controller that controls the nonvolatile memory in response to a memory card command and returns a memory card response; a first microcomputer that operates in response to an IC card command and returns an IC card response; a first bus that connects a memory card interface terminal used for input and output of the memory card command and the memory card response and the memory controller; a first switch arranged along the first bus; a second bus that connects an IC card interface terminal used for input and output of the IC card command and the IC card response and the first microcomputer; a second switch arranged along the second bus; a third bus that connects the second bus between the second switch and the first microcomputer to the memory controller; a third switch arranged along the third bus; and a second microcomputer connected to the second bus between the IC card interface terminal and the second switch and connected to the first bus between the first switch and the memory controller. This semiconductor device has first to fourth modes as operation modes selectable through the control by the second microcomputer. The first mode (SIM_MMC) is an operation mode in which, with the third switch set in a disconnected state and the second switch and the first switch set in a connected state, an operation of the memory controller responding to the memory card command from the memory card interface terminal and an operation of the first microcomputer responding to the IC card command from the IC card interface terminal can be separately performed. The second mode (SIM) is an operation mode in which, with the first switch and the third switch set in the disconnected state and the second switch set in the connected state, an operation of the first microcomputer responding to the IC card command from the IC card interface terminal can be performed. The third mode (X_SIM) is an operation mode in which, with the first switch set in the disconnected state and the second switch and the third switch set in the connected state, the memory controller and the first microcomputer can be actuated in response to an undefined IC card command from the IC card interface terminal. The fourth mode (XMC) is an operation mode in which, with the second switch set in the disconnected state and the first and third switches set in the connected state, the memory controller and the first microcomputer can be actuated in response to the memory card command from the memory card interface terminal.

With the means explained above, in the first mode, an IC card function and a memory card function can be used independently from each other. It is possible to realize backward compatibility with respect to a host apparatus corresponding to subordinate semiconductor devices having independent IC card functions and memory card functions, respectively. The second mode is useful for restricting the host apparatus from freely using the memory card function completely irrelevantly to the IC card function. The third mode makes it possible to use the memory card function using the IC card command and, in particular, makes it possible to use a security function by the first microcomputer for memory access control by the memory controller. The fourth mode makes it possible to use the security function by the first microcomputer for memory access control by the memory controller using the memory card command. Since the first to fourth modes are selectable through the control by the second microcomputer, convenience of the semiconductor device is improved.

«Initial operation mode» As one specific form, the second microcomputer sets the first mode according to operation power supply to the semiconductor device. Alternatively, the second microcomputer sets the second mode according to operation power supply to the semiconductor device. In terms of backward compatibility with respect to a host apparatus corresponding to subordinate semiconductor devices having independent IC card functions or memory card functions, respectively, it is desirable to automatically set the semiconductor device in the first mode or the second mode in processing for responding to power supply. Otherwise, since a subordinate host apparatus is required to perform special processing to transition to the first mode or the second mode, it is difficult to realize backward compatibility. In particular, the second mode is set as an initial operation mode in case that it is desired to restrict the host apparatus from freely using the memory card function completely irrelevantly to the IC card function.

«Transition of the operation mode; power supply interruption» As one specific form, the semiconductor device has a power switch that can selectively interrupt operation power supply to the memory controller. The second microcomputer controls the power switch to an OFF state in setting the second mode. In case that the semiconductor device has a power switch that can selectively interrupt operation power supply to the memory controller and the nonvolatile memory, the second microcomputer also controls the power switch to the OFF state in setting the second mode. This contributes to low power consumption of the semiconductor device as a whole. In the second mode, the first switch is in the disconnected state. Therefore, regardless of what kind of state an input and output circuit of the memory controller connected to the first bus is set according to the interruption of the operation power supply of the memory controller, it is possible to prevent occurrence of a state abnormal for the host apparatus such as inflow of an undesired current from the host apparatus, which is connected to the memory card interface terminal, to the semiconductor device.

<<Transition of the operation mode; SIM_MMC to X-SIM>> As one specific form, in the first mode, the first microcomputer gives a mode change instruction signal to the second microcomputer in response to input of a first IC card command from the second bus. The second microcomputer changes the operation mode to the third mode in response to the mode change instruction signal. In case that an IC card command defined for the first microcomputer like the first IC card command is present, it is possible to transition the operation mode using the IC card command.

<<Transition of the operation mode; SIM_MMC to X_SIM>> As one specific form, in the first mode, the second microcomputer monitors a pattern of a first undefined IC card command supplied from the IC card interface terminal to the second bus. When the first undefined IC card command is supplied from the IC card interface terminal to the second bus a predetermined number of times with respect to a response of an IC card returned by the first microcomputer in response to the first undefined IC card command, on condition that a result of monitoring performed the predetermined number of times for the supplied first undefined IC card command coincides with a predetermined pattern, the second microcomputer outputs an IC card normal response from the IC card interface terminal to the outside and changes the operation mode to the third mode. In case that an IC card command defined for the first microcomputer like the first IC card command is not present, it is possible to transition the operation mode using the first undefined IC card command.

<<Operation form of X_SIM>> As one specific form, in the third mode, the second microcomputer decodes a second undefined IC card command supplied from the IC card interface terminal to the second bus and issues a first memory card command to the memory controller. The second microcomputer converts a first memory card response returned from the memory controller as a processing result responding to the first memory card command into a predetermined IC card response and outputs the IC card response to the second bus. It is possible to cope with a cooperative operation with the memory controller that cannot be coped with by the IC card command defined for the first microcomputer.

<<Transition of the operation mode; X_SIM to SIM_MMC>> As one specific form, in the third mode, in response to input of a third undefined IC card command from the second bus, the second microcomputer confirms that the memory controller and the first microcomputer do not cooperatively operate via the third bus and then changes the operation mode to the first mode. It is possible to transition the operation mode by using the third undefined IC card command not defined for the first microcomputer.

<<Transition of the operation mode; SIM_MMC to XMC>> As one specific form, in the first mode, in response to input of a second IC card command from the second bus, the first microcomputer gives a mode change instruction signal to the second microcomputer. The second microcomputer changes the operation mode to the fourth mode in response to the mode change instruction signal. In case that an IC card command defined for the first microcomputer like the second IC card command is present, it is possible to transition the operation mode using the IC card command.

«Transition of the operation mode; SIM_MMC to XMC» As one specific form, in the first mode, the second microcomputer monitors a pattern of a fourth undefined IC card command supplied from the IC card interface terminal to the second bus. When the fourth undefined IC card command is supplied from the IC card interface terminal to the second bus a predetermined number of times with respect to a response of an IC card returned by the first microcomputer in response to the fourth undefined IC card command, on condition that a result of monitoring performed the predetermined number of times for the supplied fourth undefined IC card command coincides with a predetermined pattern, the second microcomputer outputs an IC card normal response to the second bus and then changes the operation mode to the fourth mode. In case that an IC card command defined for the first microcomputer like the second IC card command is not present, it is possible to transition the operation mode using the fourth undefined IC card command.

«Operation form of XMC» As one specific form, in the fourth mode, the memory controller decodes a memory card command supplied from the memory card interface terminal to the first bus and controls access to the nonvolatile memory according to a decoding result. The memory controller controls, according to the decoding result, access to the nonvolatile memory performed by using a response to an IC card command issued to the first microcomputer and outputs a memory card response to the access control to the first bus. It is possible to cope with a cooperative operation by the memory controller and the first microcomputer.

<<Transition of the operation mode; XMC to SIM_MMC>> As one specific form, in the fourth mode, in response to input of a fifth undefined IC card command from the second bus, the second microcomputer confirms that the memory controller and the first microcomputer do not cooperatively operate via the third bus and then changes the operation mode to the first mode. It is possible to transition the operation mode by using the fifth undefined IC card command not defined for the first microcomputer.

«XMC mode terminal» As one specific form, the semiconductor device has a mode terminal connected to the memory controller and the second microcomputer. When the mode terminal is in a first state, the second microcomputer sets the operation mode in the first mode according to operation power supply to the semiconductor device. When the mode terminal is in a second state, the second microcomputer sets the operation mode in the fourth mode according to operation power supply to the semiconductor device. This is for the purpose of, for example, in case that the semiconductor device is connected to a memory card host apparatus that does not support a procedure for transition from the first mode to the fourth mode or in case that the semiconductor device is connected to an interface protocol conversion circuit, making it possible to initially set the semiconductor device in the fourth mode supported by the memory card host apparatus and the interface protocol conversion circuit. As another application of the mode terminal, the mode terminal may be used for forcible mode transition.

«Security» As one specific form, the nonvolatile memory has a first nonvolatile storage area and a second nonvolatile storage area. The memory controller inputs a switch control signal for the third switch, allows access to only the first nonvolatile storage area in a state in which the third switch instructed to be disconnected by the switch control signal, and allows access to the first nonvolatile storage area and the second nonvolatile storage area in a state in which the third switch instructed to be connected by the switch control signal. The memory controller alone eliminates access to the second nonvolatile storage area. Therefore, it is easy to realize security in the storage area. The first nonvolatile storage area is set as a normal area and the second nonvolatile storage area is set as a secure area.

«Interface terminal» As one specific form, the IC card interface terminal includes a 1-bit input and output terminal for IC card, a clock imputer terminal for IC card, and a reset terminal for IC card having terminal positions and terminal functions conforming to ISO/IEC7816-2. The memory card interface terminal includes a clock terminal for memory card, a 1-bit command terminal for memory card, and a 1-bit data terminal for memory card allocated to free terminals in the terminal positions and the terminal functions specified by ISO/IEC7816-2. It is possible to set both the IC card interface terminal and the memory card interface terminal in a terminal array conforming to ISO/IEC7816-2. It is possible to realize backward compatibility with respect to a host apparatus that supports the IC card command.

<<Conversion of the terminal function>> As one specific form, the semiconductor device includes another interface terminal different from the memory card interface terminal as an external terminal and further includes a conversion circuit that converts the terminal function of the memory card interface terminal into a terminal function of the other interface terminal. The conversion circuit is connected to the memory card interface terminal and the other interface terminal. Therefore, an external interface terminal for the memory card interface in the semiconductor device is not limited to a specific memory card interface and may be another memory card interface or another interface such as a USB.

<<Conversion into a non-contact interface function>> As one specific form, the semiconductor device includes an RF communication terminal different from the IC card interface terminal as an external terminal and further includes a conversion circuit that converts the terminal function of the IC card interface terminal into a non-contact interface that uses the RF communication terminal. The conversion circuit is connected to the IC card interface terminal and the RF communication terminal. It is possible to realize the IC card interface function using the non-contact interface.

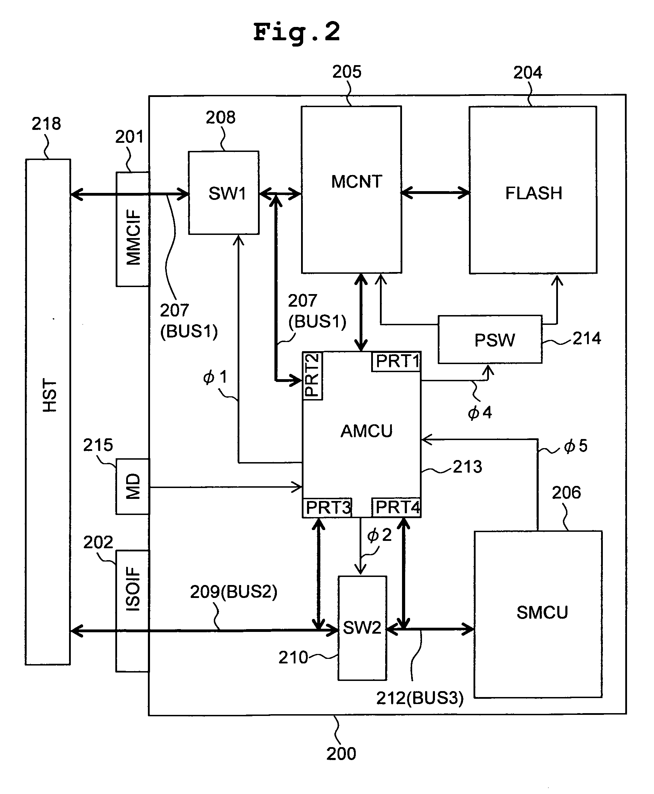

[2] «Operation modes» A second semiconductor device according to the present invention illustrated in Fig. 2 includes: an electrically rewritable nonvolatile memory; a memory controller that controls the nonvolatile memory in response to a memory card command and returns a memory card response; a first microcomputer that operates in response to an IC card command and returns an IC card response; a second microcomputer connected to the memory card controller by using a first port; a first bus that connects a memory card interface terminal used for input and output of the memory card command and the memory card response, the memory controller, and a second port of the second microcomputer; a first switch that selectively sets the first bus in a disconnected state from the memory card interface terminal; a second bus that connects an IC card interface terminal used for input and output of the IC card command and the IC card response and a third port of the second microcomputer; a third bus that connects a fourth port of the second microcomputer and the first microcomputer; and a second switch that selectively connects the second bus and the third bus. The semiconductor device has first to fourth modes as operation modes selectable through the control by the second microcomputer. The first mode (SIM_MMC) is an operation mode in which, with the second switch and the first switch set in a connected state, an operation of the memory controller responding to the memory card command from the memory card interface terminal and an operation of the first microcomputer responding to the IC card command from the IC card interface terminal can be separately performed. The second mode (SIM) is an operation mode in which, with the first switch set in a disconnected state and the second switch set in the connected state, an operation of the first microcomputer responding to the IC card command from the IC card interface terminal can be performed. The third mode (X_SIM) is an operation mode in which, with the first switch set in the disconnected state and the second switch set in the connected state, the memory controller and the first microcomputer can be actuated by using the first port, the third port, and the fourth port in response to an undefined IC card command from the IC card interface terminal while avoiding collision of the busses. The fourth mode (XMC) is an operation mode in which, with the first switch set in the connected state and the second switch set in the disconnected state, the memory controller and the first microcomputer can be actuated by using the first port and the fourth port in response to the memory card command from the memory card interface terminal.

With the means explained above, in the first mode, an IC card function and a memory card function can be used independently from each other. It is possible to realize backward compatibility with respect to a host apparatus corresponding to subordinate semiconductor devices having independent IC card functions and memory card functions, respectively. The second mode is useful for restricting the host apparatus from freely using the memory card function completely irrelevantly to the IC card function. The third mode makes it possible to use the memory card function using the IC card command and, in particular, makes it possible to use a security function by the first microcomputer for memory access control by the memory controller. The fourth mode makes it possible to use the security function by the first microcomputer for memory access control by the memory controller using the memory card command. Since the first to fourth modes are selectable through the control by the second microcomputer, convenience of the semiconductor device is improved.

«Initial operation mode» As one specific form, the second microcomputer sets the first mode according to operation power supply to the semiconductor device. Alternatively, the second microcomputer sets the second mode according to operation power supply to the semiconductor device. In terms of backward compatibility with respect to a host apparatus corresponding to subordinate semiconductor devices having independent IC card functions or memory card functions, respectively, it is desirable to automatically set the semiconductor device in the first mode or the second mode in processing for responding to power supply. Otherwise, since a subordinate host apparatus is required to perform special processing to transition to the first mode or the second mode, it is difficult to realize backward compatibility. In particular, the second mode is set as an initial operation mode in case that it is desired to restrict the host apparatus from freely using the memory card function completely irrelevantly to the IC card function.

«Transition of the operation mode; power supply interruption» As one specific form, the semiconductor device has a power switch that can selectively interrupt operation power supply to the memory controller. The second microcomputer controls the power switch to an OFF state in setting the second mode. The semiconductor device has a power switch that can selectively interrupt operation power supply to the memory controller and the nonvolatile memory. The second microcomputer also controls the power switch to the OFF state in setting the second mode. This contributes to low power consumption of the semiconductor device as a whole. In the second mode, the first switch is in the disconnected state. Therefore, regardless of what kind of state an input and output circuit of the memory controller connected to the first bus is set according to the interruption of the operation power supply of the memory controller, it is possible to prevent occurrence of a state abnormal for the host apparatus such as inflow of an undesired current from the host apparatus, which is connected to the memory card interface terminal, to the semiconductor device.

<<Transition of the operation mode; SIM_MMC to X_SIM>> As one specific form, in the first mode, the first microcomputer gives a mode change instruction signal to the second microcomputer in response to input of a first IC card command from the second bus. The second microcomputer sets the third mode in response to the mode change instruction signal. In case that an IC card command defined for the first microcomputer like the first IC card command is present, it is possible to transition the operation mode using the IC card command.

<<Transition of the operation mode; SIM_MMC to X_SIM>> As one specific form, in the first mode, the second microcomputer monitors, from the third port, a pattern of a first undefined IC card command supplied from the IC card interface terminal to the second bus. When the first undefined IC card command is supplied from the IC card interface terminal to the second bus a predetermined number of times with respect to a response of an IC card returned by the first microcomputer in response to the first undefined IC card command, on condition that a result of monitoring performed the predetermined number of times for the supplied first undefined IC card command coincides with a predetermined pattern, the second microcomputer outputs an IC card normal response from the third port to the outside via the IC card interface terminal and changes the operation mode to the third mode. In case that an IC card command defined for the first microcomputer like the first IC card command is not present, it is possible to transition the operation mode using the first undefined IC card command.

<<Operation form of X_SIM>> As one specific form, in the third mode, the second microcomputer decodes a second undefined IC card command supplied from the IC card interface terminal to the third port via the second bus and issues a first memory card command to the memory card controller. The second microcomputer converts a first memory card response returned from the memory controller as a processing result responding to the first memory card command into a predetermined IC card response and outputs the IC card response from the third port to the second bus. It is possible to cope with a cooperative operation with the memory controller that cannot be coped with by the IC card command defined for the first microcomputer.

<<Transition of the operation mode; X_SIM to SIM_MMC>> As one specific form, in the third mode, in response to input of a third undefined IC card command from the second bus to the third port, the second microcomputer confirms that the memory controller and the first microcomputer do not cooperatively operate via the first port and the fourth port and then changes the operation mode to the first mode. It is possible to transition the operation mode by using the third undefined IC card command not defined for the first microcomputer.

«Transition of the operation mode; SIM_MMC to XMC» As one specific form, in the first mode, in response to input of a second IC card command from the second bus, the first microcomputer gives a mode change instruction signal to the second microcomputer. The second microcomputer changes the operation mode to the fourth mode in response to the mode change instruction signal. In case that an IC card command defined for the first microcomputer like the second IC card command is present, it is possible to transition the operation mode using the IC card command.

«Transition of the operation mode; SIM_MMC to XMC» As one specific form, in the first mode, the second microcomputer monitors a pattern of a fourth undefined IC card command supplied from the IC card interface terminal to the third port via the second bus. When the fourth undefined IC card command is supplied from the IC card interface terminal to the second bus a predetermined number of times with respect to a response of an IC card returned by the first microcomputer in response to the fourth undefined IC card command, on condition that a result of monitoring performed the predetermined number of times for the supplied fourth undefined IC card command coincides with a predetermined pattern, the second microcomputer outputs an IC card normal response to the second bus and then changes the operation mode to the fourth mode. In case that an IC card command defined for the first microcomputer like the second IC card command is not present, it is possible to transition the operation mode using the fourth undefined IC card command.

«Operation form of XMC» As one specific form, in the fourth mode, the memory controller decodes a memory card command supplied from the memory card interface terminal to the first bus and controls access to the nonvolatile memory according to a decoding result. The memory controller controls, according to the decoding result, access to the nonvolatile memory performed by using a response to an IC card command issued to the first microcomputer and outputs a memory card response to the access command to the first bus. It is possible to cope with a cooperative operation by the memory controller and the first microcomputer.

<<Transition of the operation mode; XMC to SIM_MMC>> As one specific form, in the fourth mode, in response to input of a fifth undefined IC card command from the second bus, the second microcomputer confirms that the memory controller and the first microcomputer do not cooperatively operate via the first port and the fourth port and then changes the operation mode to the first mode. It is possible to transition the operation mode by using the fifth undefined IC card command not defined for the first microcomputer.

<<XMC mode terminal>> As one specific form, the semiconductor device has a mode terminal connected to the second microcomputer. When the mode terminal is in a first state, the second microcomputer sets the operation mode in the first mode according to operation power supply to the semiconductor device. When the mode terminal is in a second state, the second microcomputer sets the operation mode in the fourth mode according to operation power supply to the semiconductor device. This is for the purpose of, for example, in case that the semiconductor device is connected to a memory card host apparatus that does not support a procedure for transition from the first mode to the fourth mode or in case that the semiconductor device is connected to an interface protocol conversion circuit, making it possible to initially set the semiconductor device in the fourth mode supported by the memory card host apparatus and the interface protocol conversion circuit. As another application of the mode terminal, the mode terminal may be used for forcible mode transition.

«Security» As one specific form, the nonvolatile memory has a first nonvolatile storage area and a second nonvolatile storage area. The memory controller allows access to only the first nonvolatile storage area in the first mode and the second mode, and allows access to the first nonvolatile storage area and the second nonvolatile storage area in the third mode and the fourth mode. The memory controller alone eliminates access to the second nonvolatile storage area. Therefore, it is easy to realize security in the storage area. The first nonvolatile storage area is set as a normal area and the second nonvolatile storage area is set as a secure area.

«Interface terminal» As one specific form, the IC card interface terminal includes a 1-bit input and output terminal for IC card, a clock imputer terminal for IC card, and a reset terminal for IC card having terminal positions and terminal functions conforming to ISO/IEC7816-2. The memory card interface terminal includes a clock terminal for memory card, a 1-bit command terminal for memory card, and a 1-bit data terminal for memory card allocated to free terminals in the terminal positions and the terminal functions specified by ISO/IEC7816-2. It is possible to set both the IC card interface terminal and the memory card interface terminal in a terminal array conforming to ISO/IEC7816-2. It is possible to realize backward compatibility with respect to a host apparatus that supports the IC card command.

<<Conversion of the terminal function>> As one specific form, the semiconductor device includes another interface terminal different from the memory card interface terminal as an external terminal and further includes a conversion circuit that converts the terminal function of the memory card interface terminal into a terminal function of the other interface terminal. The conversion circuit is connected to the memory card interface terminal and the other interface terminal. Therefore, an external interface terminal for the memory card interface in the semiconductor device is not limited to a specific memory card interface and may be another memory card interface or another interface such as a USB (universal serial bus).

<<Conversion into a non-contact interface function>> As one specific form, the semiconductor device includes an RF communication terminal different from the IC card interface terminal as an external terminal and further includes a conversion circuit that converts the terminal function of the IC card interface terminal into a non-contact interface that uses the RF communication terminal. The conversion circuit is connected to the IC card interface terminal and the RF communication terminal. It is possible to realize the IC card interface function using the non-contact interface.

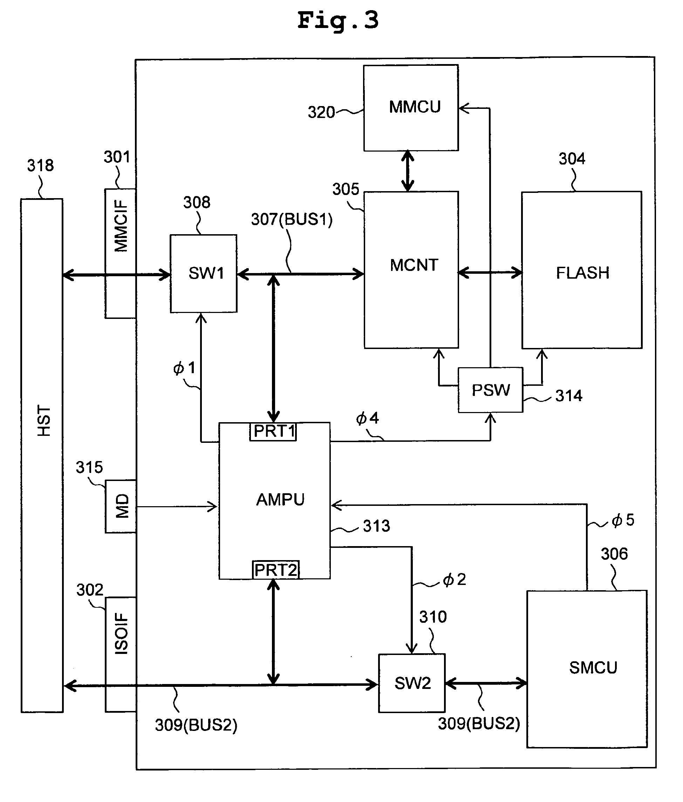

[3] «Operation modes» A third semiconductor device according to the present invention illustrated in Fig. 3 includes: an electrically rewritable nonvolatile memory; a memory controller that controls the nonvolatile memory in response to a memory card command and returns a memory card response; a first microcomputer that operates in response to an IC card command and returns an IC card response; a first bus that connects a memory card interface terminal used for input and output of the memory card command and the memory card response and the memory controller; a first switch arranged along the first bus; a second bus that connects an IC card interface terminal used for input and output of the IC card command and the IC card response and the first microcomputer; a second switch arranged along the second bus; a second microcomputer connected to the second bus between the IC card interface terminal and the second switch and connected to the first bus between the first switch and the memory controller; and a third microcomputer connected to the memory controller. The semiconductor device has first to fourth modes as operation modes selectable through the control by the second microcomputer. The first mode (SIM_MMC) is an operation mode in which, with the first switch and the second switch set in a connected state, an operation of the memory controller responding to the memory card command from the memory card interface terminal and an operation of the first microcomputer responding to the IC card command from the IC card interface terminal can be separately performed. The second mode (SIM) is an operation mode in which, with the first switch set in a disconnected state and the second switch set in the connected state, an operation of the first microcomputer responding to the IC card command from the IC card interface terminal can be performed. The third mode (X_SIM) is an operation mode in which, with the first switch set in the disconnected state and the second switch set in the connected state, the memory controller and the third microcomputer can be actuated in response to an undefined IC card command from the IC card interface terminal using a first port and a second port. The fourth mode (XMC) is an operation mode in which, with the second switch set in the disconnected state and the first switch set in the connected state, the memory controller and the third microcomputer can be actuated in response to the memory card command from the memory card interface terminal.

With the means explained above, in the first mode, an IC card function and a memory card function can be used independently from each other. It is possible to realize backward compatibility with respect to a host apparatus corresponding to subordinate semiconductor devices having independent IC card functions and memory card functions, respectively. The second mode is useful for restricting the host apparatus from freely using the memory card function completely irrelevantly to the IC card function. The third mode makes it possible to use the memory card function using the IC card command and, in particular, makes it possible to use a security function by the third microcomputer for memory access control by the memory controller. The fourth mode makes it possible to use the security function by the third microcomputer for memory access control by the memory controller using the memory card command. Since the first to fourth modes are selectable through the control by the second microcomputer, convenience of the semiconductor device is improved.

«Initial operation mode» As one specific form, the second microcomputer sets the first mode according to operation power supply to the semiconductor device. Alternatively, the second microcomputer sets the second mode according to operation power supply to the semiconductor device. In terms of backward compatibility with respect to a host apparatus corresponding to subordinate semiconductor devices having independent IC card functions or memory card functions, respectively, it is desirable to automatically set the semiconductor device in the first mode or the second mode in processing for responding to power supply. Otherwise, since a subordinate host apparatus is required to perform special processing to transition to the first mode or the second mode, it is difficult to realize backward compatibility. In particular, the second mode is set as an initial operation mode in case that it is desired to restrict the host apparatus from freely using the memory card function completely irrelevantly to the IC card function.

«Transition of the operation mode; power supply interruption» As one specific form, the semiconductor device has a power switch that can selectively interrupt operation power supply to the memory controller. The second microcomputer controls the power switch to an OFF state in setting the second mode. The semiconductor device has a power switch that can selectively interrupt operation power supply to the memory controller and the nonvolatile memory. The second microcomputer also controls the power switch to the OFF state in setting the second mode. This contributes to low power consumption of the semiconductor device as a whole. In the second mode, the first switch is in the disconnected state. Therefore, regardless of what kind of state an input and output circuit of the memory controller connected to the first bus is set according to the interruption of the operation power supply of the memory controller, it is possible to prevent occurrence of a state abnormal for the host apparatus such as inflow of an undesired current from the host apparatus, which is connected to the memory card interface terminal, to the semiconductor device.

<<Transition of the operation mode; SIM_MMC to X_SIM>> As one specific form, in the first mode, the first microcomputer gives a mode change instruction signal to the second microcomputer in response to input of a first IC card command from the second bus. The second microcomputer changes the operation mode to the third mode in response to the mode change instruction signal. In case that an IC card command defined for the first microcomputer like the first IC card command is present, it is possible to transition the operation mode using the IC card command.

<<Transition of the operation mode; SIM_MMC to X_SIM>> As one specific form, in the first mode, the second microcomputer monitors a pattern of a first undefined IC card command supplied from the IC card interface terminal to the second bus. When the first undefined IC card command is supplied from the IC card interface terminal to the second bus a predetermined number of times with respect to a response of an IC card returned by the first microcomputer in response to the first undefined IC card command, if a result of monitoring performed the predetermined number of times for the supplied first undefined IC card command coincides with a predetermined pattern, the second microcomputer outputs an IC card normal response from the IC card interface terminal to the outside and changes the operation mode to the third mode. In case that an IC card command defined for the first microcomputer like the first IC card command is not present, it is possible to transition the operation mode using the first undefined IC card command.

<<Operation form of X_SIM>> As one specific form, in the third mode, the second microcomputer decodes a second undefined IC card command supplied from the IC card interface terminal to the second bus and issues a first memory card command to the memory card controller. The second microcomputer converts a first memory card response returned from the memory controller as a processing result responding to the first memory card command into a predetermined IC card response and outputs the IC card response to the second bus. It is possible to cope with a cooperative operation with the memory controller that cannot be coped with by the IC card command defined for the first microcomputer.

<<Transition of the operation mode; X_SIM to SIM_MMC>> As one specific form, in the third mode, in response to input of a third undefined IC card command from the second bus, the second microcomputer confirms that the memory controller and the third microcomputer do not cooperatively operate and then changes the operation mode to the first mode. It is possible to transition the operation mode by using the third undefined IC card command not defined for the first microcomputer.

<<Transition of the operation mode; SIM_MMC to XMC>> As one specific form, in the first mode, in response to input of a second IC card command from the second bus, the first microcomputer gives a mode change instruction signal to the second microcomputer. The second microcomputer changes the operation mode to the fourth mode in response to the mode change instruction signal. In case that an IC card command defined for the first microcomputer like the second IC card command is present, it is possible to transition the operation mode using the IC card command.

<<Transition of the operation mode; SIM_MMC to XMC>> As one specific form, in the first mode, the second microcomputer monitors a pattern of a fourth undefined IC card command supplied from the IC card interface terminal to the second bus. When the fourth undefined IC card command is supplied from the IC card interface terminal to the second bus a predetermined number of times with respect to a response of an IC card returned by the first microcomputer in response to the fourth undefined IC card command, on condition that a result of monitoring performed the predetermined number of times for the supplied fourth undefined IC card command coincides with a predetermined pattern, the second microcomputer outputs an IC card normal response to the second bus and then changes the operation mode to the fourth mode. In case that an IC card command defined for the first microcomputer like the second IC card command is not present, it is possible to transition the operation mode using the fourth undefined IC card command.

«Operation form of XMC» As one specific form, in the fourth mode, the memory controller decodes a memory card command supplied from the memory card interface terminal to the first bus and controls access to the nonvolatile memory according to a decoding result. The memory controller controls, according to the decoding result, access to the nonvolatile memory performed by using a response to an IC card command issued to the third microcomputer and outputs a memory card response to the access command to the first bus. It is possible to cope with a cooperative operation by the memory controller and the third microcomputer.

<<Transition of the operation mode; XMC to SIM_MMC>> As one specific form, in the fourth mode, in response to input of a fifth undefined IC card command from the second bus, the second microcomputer confirms that the memory controller and the third microcomputer do not cooperatively operate and then changes the operation mode to the first mode. It is possible to transition the operation mode by using the fifth undefined IC card command not defined for the first microcomputer.

<<XMC mode terminal>> As one specific form, the semiconductor device has a mode terminal connected to the second microcomputer. When the mode terminal is in a first state, the second microcomputer sets the operation mode in the first mode according to operation power supply to the semiconductor device. When the mode terminal is in a second state, the second microcomputer sets the operation mode in the fourth mode according to operation power supply to the semiconductor device. This is for the purpose of, for example, in case that the semiconductor device is connected to a memory card host apparatus that does not support a procedure for transition from the first mode to the fourth mode or in case that the semiconductor device is connected to an interface protocol conversion circuit, making it possible to initially set the semiconductor device in the fourth mode supported by the memory card host apparatus and the interface protocol conversion circuit. As another application of the mode terminal, the mode terminal may be used for forcible mode transition.

«Security» As one specific form, the nonvolatile memory has a first nonvolatile storage area and a second nonvolatile storage area. The memory controller allows access to only the first nonvolatile storage area in the first mode and the second mode and allows access to the first nonvolatile storage area and the second nonvolatile storage area in the third mode and the fourth mode. The memory controller alone eliminates access to the second nonvolatile storage area. Therefore, it is easy to realize security in the storage area. The first nonvolatile storage area is set as a normal area and the second nonvolatile storage area is set as a secure area.

«Interface terminal» As one specific form, the IC card interface terminal includes a 1-bit input and output terminal for IC card, a clock imputer terminal for IC card, and a reset terminal for IC card having terminal positions and terminal functions conforming to ISO/IEC7816-2. The memory card interface terminal includes a clock terminal for memory card, a 1-bit command terminal for memory card, and a 1-bit data terminal for memory card allocated to free terminals in the terminal positions and the terminal functions specified by ISO/IEC7816-2. It is possible to set both the IC card interface terminal and the memory card interface terminal in a terminal array conforming to ISO/IEC7816-2. It is possible to realize backward compatibility with respect to a host apparatus that supports the IC card command.

«Conversion of the terminal function» As one specific form, the semiconductor device includes another interface terminal different from the memory card interface terminal as an external terminal and further includes a conversion circuit that converts the terminal function of the memory card interface terminal into a terminal function of the other interface terminal. The conversion circuit is connected to the memory card interface terminal and the other interface terminal. Therefore, an external interface terminal for the memory card interface in the semiconductor device is not limited to a specific memory card interface and may be another memory card interface or another interface such as a USB.

«Conversion into a non-contact interface function» As one specific form, the semiconductor device includes an RF communication terminal different from the IC card interface terminal as an external terminal and further includes a conversion circuit that converts the terminal function of the IC card interface terminal into a non-contact interface that uses the RF communication terminal. The conversion circuit is connected to the IC card interface terminal and the RF communication terminal. It is possible to realize the IC card interface function using the non-contact interface.

### EFFECTS OF THE INVENTION

Effects obtained by representative ones of the inventions disclosed in this application are briefly explained below.

It is possible to improve convenience of a semiconductor device having an IC card function and a memory card function.

### BRIEF DESCRIPTION OF THE DRAWINGS

Fig. 1 is a block diagram illustrating a first SIM card as a semiconductor device according to the present invention.
Fig. 2 is a block diagram illustrating a second SIM card as the semiconductor device according to the present invention.
Fig. 3 is a block diagram illustrating a third SIM card as the semiconductor device according to the present invention.
Fig. 4 is a plan view showing an example in which terminal positions conforming to ISO/IEC7816-2 are assigned to memory card interface terminals and IC card interface terminals.
Fig. 5 is a plan view showing an array of interface terminals different from the interface terminals shown in Fig. 4.
Fig. 6 is a plan view illustrating a mounting layout of circuit modules on an SIM card 100 in a state in which a lid is removed.
Fig. 7 is a plan view illustrating a mounting layout of circuit modules in an SIM card 300 in a state in which a lid is removed.
Fig. 8 is an explanatory diagram schematically showing a circuit connection form in a first mode (an SIM_MMC mode).
Fig. 9 is an explanatory diagram schematically showing a circuit connection form in a second mode (an SIM mode).
Fig. 10 is an explanatory diagram schematically showing a circuit connection form in a third mode (an X_SIM mode).
Fig. 11 is an explanatory diagram schematically showing a circuit connection form in a fourth mode (an XMC mode).
Fig. 12 is a flowchart illustrating an initialization sequence during power supply.
Fig. 13 is a flowchart illustrating the initialization sequence during power supply.
Fig. 14 is a flowchart illustrating a control procedure for transitioning an operation mode from the SIM_MMC mode to the X_SIM mode using an undefined IC card command.
Fig. 15 is a flowchart illustrating the control procedure for transitioning the operation mode from the SIM_MMC mode to the X_SIM mode using the undefined IC card command.
Fig. 16 is a flowchart illustrating a single read command operation as one of operation forms in the X_SIM mode.
Fig. 17 is a flowchart illustrating a single write command operation as another one of the operation forms in the X_SIM mode.
Fig. 18 is a flowchart illustrating a control procedure for transitioning the operation mode from the X_SIM mode to the SIM_MMC mode using the undefined IC card command. EXPLANATION OF REFERENCE NUMERALS

100, 200, 300 SIM cards
101, 201, 301 memory card interface terminals (MMCIF)
102, 202, 302 IC card interface terminals (ISOIF)
104, 204, 304 flash memories (FLASH)
105, 205, 305 memory controllers (MCNT)
106, 206, 306 first microcomputers (SMCU)
320 second microcomputer (MMCU)
107, 207, 307 first buses (BUS1)
108, 208, 308 first switches (SW1)
109, 209, 309 second buses (BUS2)
110, 210, 310 second switches (SW2)
111 third bus (BUS3)
112 third switch (SW3)
PRT first port
PRT2 second port
113, 213, 313 second microcomputers (AMCU)
φ1, φ2, φ3 switch control signals
114, 214, 314 power switches (PSW)
φ4 switch control signal
115, 215, 315 mode terminals (MD)
118 host apparatus
IC_IO (C7 terminal) 1-bit input and output terminal for IC card
IC_CLK (C3 terminal) clock input terminal for IC card
IC_RES (C2 terminal) reset terminal for IC card
CLK_MMC (C6 terminal) clock terminal for memory card
CMD_MMC (C8 terminal) command terminal for memory card
DAT_MMC (C4 terminal) data terminal for memory card
IC_VCC (C1 terminal) power supply terminal
VSS (C5 terminal) ground terminal

### BEST MODE FOR CARRYING OUT THE INVENTION

### «Block diagram of a first SIM card»

A block diagram of a first SIM card 100 for a semiconductor device according to the present invention is shown in Fig. 1.

The SIM card 100 is a semiconductor device that has an IC card function and a memory card function and can associate the functions each other. This SIM card 100 has, for example, a function conforming to Secure MMC 2.0 Interface Layer Specification Version 1.0 MMCA Technical Committee (MultiMediaCard Association, Inc. October 2005) as the memory card function. The SIM card 100 has, for example, a function conforming to ISO/IEC 7816-3 Second edition 1887-12-15, Electric signal and transmission protocols as the IC card function.

As a specific application of the SIM card 100, the SIM card 100 inserted in a cellular phone and used is explained. When the SIM card 100 is used in this way, examples of applications of the IC card function include storage of subscriber information and accounting information for security of personal information and storage of programs for realizing applications for performing subscriber ID authentication, payment, and the like. Examples of applications of the memory card function include a data storage application for storing image data such as photographs, music data such as incoming call melody, and data of addresses. In the memory card function, larger-capacity and higher-speed data input and output than the IC card function is required. Therefore, a nonvolatile memory having capacity larger that of a nonvolatile memory used in the IC card function is used.

In order to perform external interface, the SIM card 100 includes, for example, in a card substrate, a memory card interface terminal (MMCIF) 101 used for input and output of a memory card command and a memory card response and an IC card interface terminal (ISOIF) 102 used for input and output of an IC card command and an IC card response. The SIM card 100 includes, on the card substrate, a flash memory (FLASH) 104 as an electrically rewritable nonvolatile memory, a memory controller (MCNT) 105 that controls the flash memory 104 in response to the memory card command and returns the memory card response, and a first microcomputer (SMCU) 106 that operates in response to the IC card command and returns the IC card response. In order to connect the circuit elements, the SIM card 100 includes a first bus (BUS1) 107 that connects the memory card interface terminal 101 and the memory controller 105, a first switch (SW1) 108 arranged along the first bus, a second bus (BUS2) 109 that connects the IC card interface terminal 102 and the first microcomputer 106, a second switch (SW2) 110 arranged along the second bus 109, a third bus (BUS3) 111 that connects the second bus 109 between the second switch 110 and the first microcomputer 106 to the memory controller 105, and a third switch (SW3) 112 arranged along the third bus. The SIM card 100 further includes a second microcomputer (AMCU) 113 connected to the second bus 109 between the IC card interface terminal 102 and the second switch 110 via a first port (PRT1) and connected to the first bus 107 between the first switch 108 and the memory controller 105 via a second port (PRT2). The second microcomputer 113 controls an operation mode of the SIM card 100 and controls arbitration and cooperation of the IC card function and the memory card function. Reference signs φ1, φ2, and φ3 denote switch control signals for the first switch 108, the second switch 110, and the third switch 112. The switch control signals are outputted from a predetermined port of the second microcomputer 113. The switch control signal φ3 is supplied to the memory controller 105 as well.

Reference numeral 114 denotes a power switch (PSW) exclusively used for the memory controller 105 and the flash memory 104. The power switch 114 is controlled by a switch control signal φ4 outputted by the second microcomputer 113 from a predetermined port. Reference numeral 115 denotes a specific mode terminal (MD). The mode terminal 115 is connected to a signal line for the switch control signal φ3. Reference numeral 118 denotes a host apparatus. The host apparatus 118 is, for example, a cellular phone or a portable terminal apparatus. It is assumed that the mode terminal 115 is set floating and the second microcomputer 113 controls the switch control signal φ3. In this specification, a port of a microcomputer means an input and output port unless specifically explained otherwise.

### «Interface terminal»

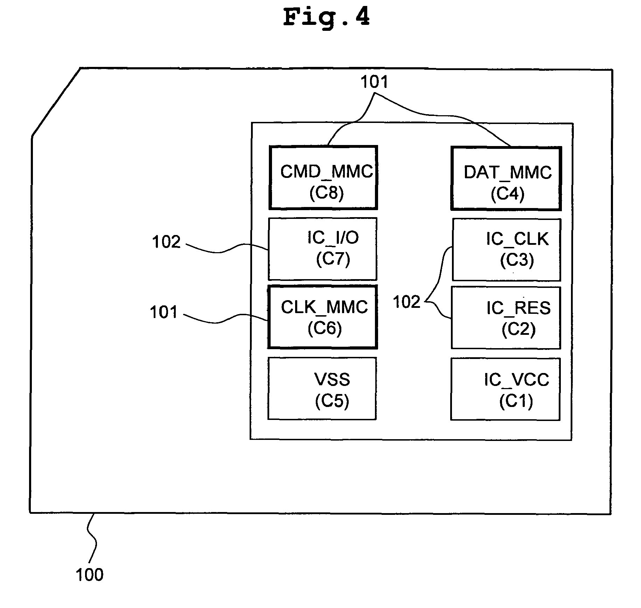

For convenience of explanation, an MMC mode with a data terminal set as 1 bit is assumed as the memory card function. Memory card interface terminals 101 and IC card interface terminals 102 are assigned to terminal positions conforming to, for example, ISO/IEC7816-2. As illustrated in Fig. 4, the IC card interface terminals 102 include a 1-bit input and output terminal for IC card IC_IO (a C7 terminal), a clock input terminal for IC card IC_CLK (a C3 terminal), and a reset terminal for IC card IC_RES (a C2 terminal) having terminal positions and terminal functions conforming to ISO/IEC7816-2. The memory card interface terminals 101 include a clock terminal for memory card CLK_MMC (a C6 terminal), a 1-bit command terminal for memory card CMD_MMC (a C8 terminal), and a 1-bit data terminal for memory card DAT_MMC (a C4 terminal) allocated to free terminals in the terminal positions and the terminal functions specified by ISO/IEC7816-2. Reference sign IC_VCC (a C1 terminal) denotes a power supply terminal and VSS (a C5 terminal) denotes a ground terminal. The power supply terminal IC_VCC and the ground terminal VSS are used as common power supply terminals in the SIM card 100. In terms of a terminal array shown in Fig. 4, it is possible to obtain backward compatibility with respect to the host apparatus 118 that supports the IC card command.

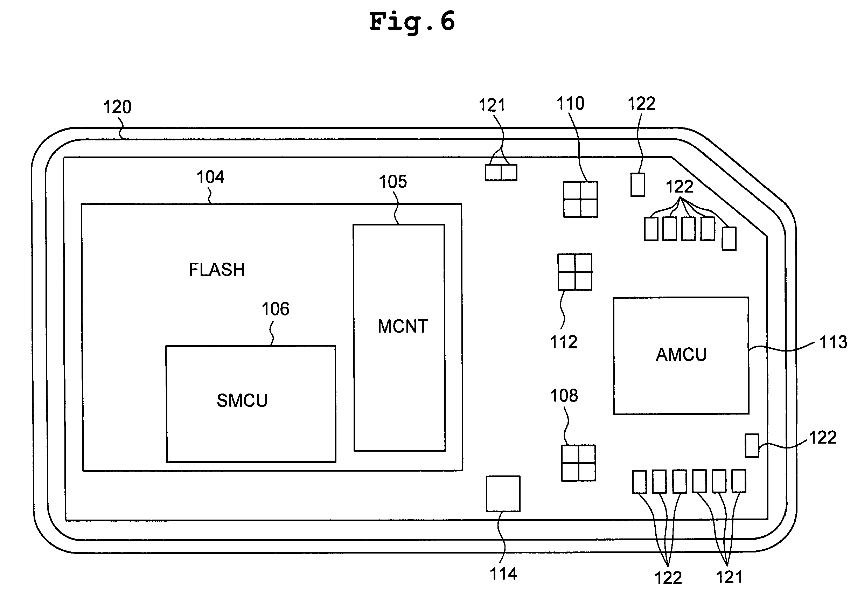

A mounting layout of circuit modules in the SIM card 100 is shown in Fig. 6 in a state in which a lid is removed. The lid in this embodiment is explained as sealing resin made of thermosetting resin or a case made of thermoplastic resin explained later or a lid including both the sealing resin and the case. The card substrate 120 has an external dimension with, for example, a plane dimension of 15mmx25mm and the thickness of 0.76 mm. The memory controller 105, the first microcomputer 106, the flash memory 104, and the second microcomputer 113 are configured by separate semiconductor chips, respectively. The flash memory 104 and the second microcomputer 113 are die-bonded on the card substrate by using a die-bond paste. The memory controller 105 and the first microcomputer 106 are sequentially stacked and fixed on the flash memory 104. A plane dimension of the flash memory 104 is larger than plane dimensions of the memory controller 105, the first microcomputer 106, and the second microcomputer 113. By stacking the memory controller 105 and the first microcomputer 106 on the flash memory 104 in this way, it is possible to improve a degree of freedom of the layout in the SIM card 100 and mount a larger number of semiconductor chips. In this embodiment, the flash memory 104 is one chip. However, it is possible to realize an increase in capacity of the memory card function by, for example, mounting plural flash memories having the same performance as the flash memory 104. It is possible to mount a larger number of flash memories by stacking the plural flash memories 104.

In free areas of the card substrate, switches 108, 110, 112, and 114 are unevenly distributed and pass capacitors 121 and resistive elements 122 used for pull-up and the like are unevenly distributed. The pass capacitors 121 and the resistive elements 122 are not always necessary. A predetermined number of the pass capacitors 121 and a predetermined number of the resistive elements 122 are arranged as required. Although not specifically shown in a figure, electrode pads of the respective circuit elements are coupled to, for example, bonding leads corresponding thereto on the card substrate 120 by wires. The bonding leads are connected to a wiring layer of the card substrate 120. A part of the wiring layer is coupled to the memory card interface terminal (MMCIF) 101 and the IC card interface terminal (ISOIF) 102 exposed on the surface of the card substrate 120.

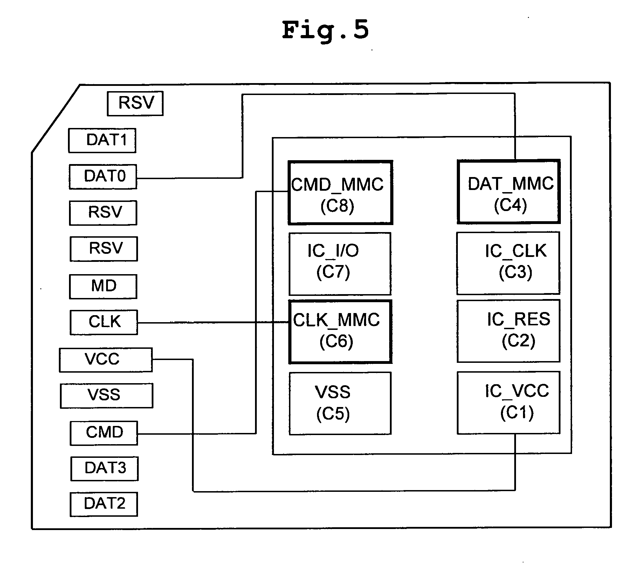

The respective elements including the semiconductor chips such as the memory controller 105, the first microcomputer 106, the flash memory 104, and the second microcomputer 113 are covered with, for example, sealing resin (not shown) made of thermosetting resin together with the surface of the card substrate. The elements are further covered with a case made of thermoplastic rein to cover the sealing resin. The card substrate and the case form an external shape of the SIM card 100 shown in Fig. 4 or Fig. 5. As another forming method, it is also possible to form the external shape of the SIM card 100 shown in Fig. 4 or Fig. 5 only with the sealing resin made of the thermosetting resin without using the case. In this case, since the thickness of the case is eliminated, it is possible to facilitate a reduction in size of the SIM card 100.

### «Operation modes»

The SIM card 100 has first to fourth modes as operation modes selectable through the control by the second microcomputer 113.

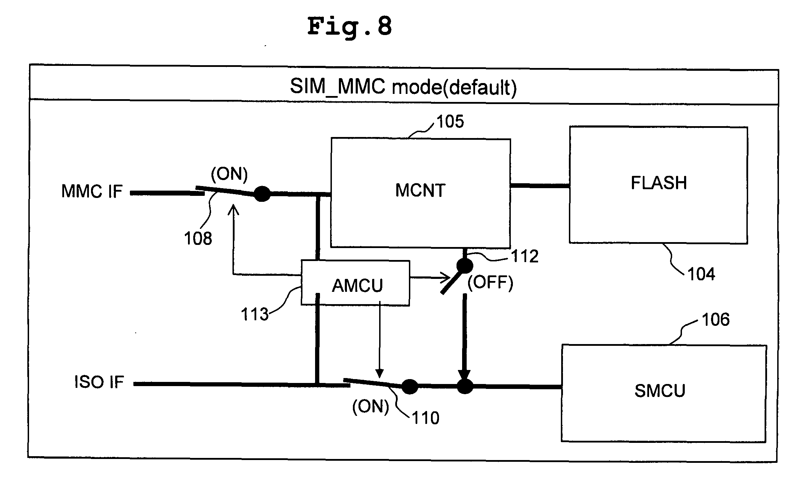

The first mode (an SIM_MMC mode) is an operation mode in which, as illustrated in Fig. 8, with the third switch 112 set in a disconnected state (OFF) and the second switch 110 and the first switch 108 set in a connected state (ON), an operation of the memory controller 105 responding to the memory card command from the memory card interface terminal 101 and an operation of the first microcomputer 106 responding to the IC card command from the IC card interface terminal 102 can be separately performed.

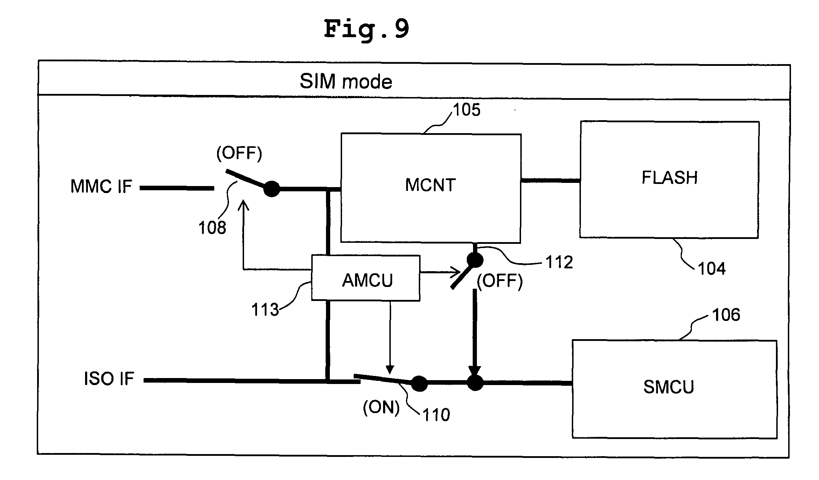

The second mode (an SIM mode) is an operation mode in which, as illustrated in Fig. 9, with the first switch 108 and the third switch 112 set in a disconnected state and the second switch 110 set in the connected state, an operation of the first microcomputer 106 responding to the IC card command from the IC card interface terminal 102 can be performed.

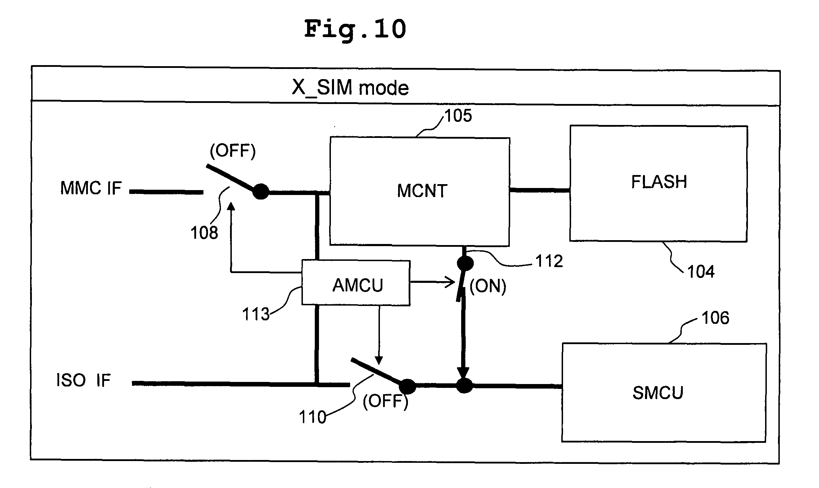

The third mode (an X_SIM mode) is an operation mode in which, as illustrated in Fig. 10, with the first switch 108 set in the disconnected state and the second switch 110 and the third switch 112 set in the connected state, the memory controller 105 and the first microcomputer 106 can be actuated in response to an undefined IC card command from the IC card interface terminal 102.

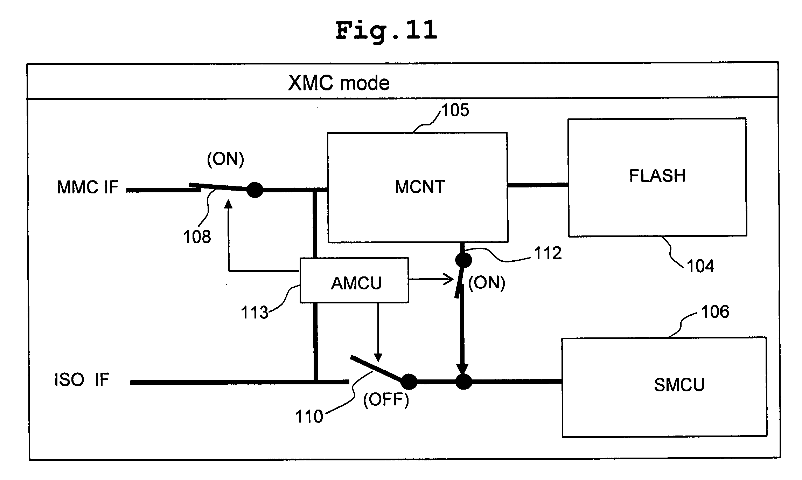

The fourth mode (an XMC mode) is an operation mode in which, as illustrated in Fig. 11, with the second switch 110 set in the disconnected state and the first switch 108 and the third switch 112 set in the connected state, the memory controller 105 and the first microcomputer 106 can be actuated in response to the memory card command from the memory card interface terminal 101.

In the first mode (the SIM_MMC mode), the IC card function and the memory card function can be used independently from each other. It is possible to realize backward compatibility with respect to a host apparatus corresponding to subordinate SIM cards having independent IC card functions and memory card functions, respectively. The second mode (the SIM mode) is useful for restricting the host apparatus from freely using the memory card function completely irrelevantly to the IC card function. The third mode (the X_SIM mode) makes it possible to use the memory card function using the IC card command and, in particular, makes it possible to use a security function by the first microcomputer 106 for memory access control by the memory controller 105. The fourth mode (the XMC mode) makes it possible to use the security function by the first microcomputer 106 for memory access control by the memory controller 105 using the memory card command. Although not specifically limited, the memory controller 105 has a secure MMC mode and a normal MMC mode as memory card modes. The memory card modes are switched in response to a switch command supplied thereto. The secure MMC mode is an operation mode for making it possible to use the security function by the first microcomputer 106 for the memory access control by the memory controller 105. In short, the secure MMC mode is a memory card mode in which the memory controller 105 is allowed to cooperatively operate with the first microcomputer 106. In this sense, the normal MMC mode is a memory card mode in which the memory controller 105 is not allowed to cooperatively operate with the first microcomputer 106.

Since the first to fourth modes are selectable through the control by the second microcomputer 113, convenience of the SIM card 100 is improved.

### «Initialization operation during power supply»

The second microcomputer 113 sets the first mode (SIM_MMC) or the second mode (SIM) according to operation power supply to the SIM card 100. In terms of backward compatibility with respect to a host apparatus corresponding to subordinate SIM cards having independent IC card functions or memory card functions, respectively, it is desirable to automatically set the SIM card 100 in the first mode or the second mode in processing for responding to power supply. Otherwise, since a subordinate host apparatus is required to perform special processing to transition to the first mode or the second mode, it is difficult to realize backward compatibility. In particular, it is advisable to select the second mode as an initial operation mode in case that it is desired to restrict the host apparatus 118 from freely using the memory card function completely irrelevantly to the IC card function.

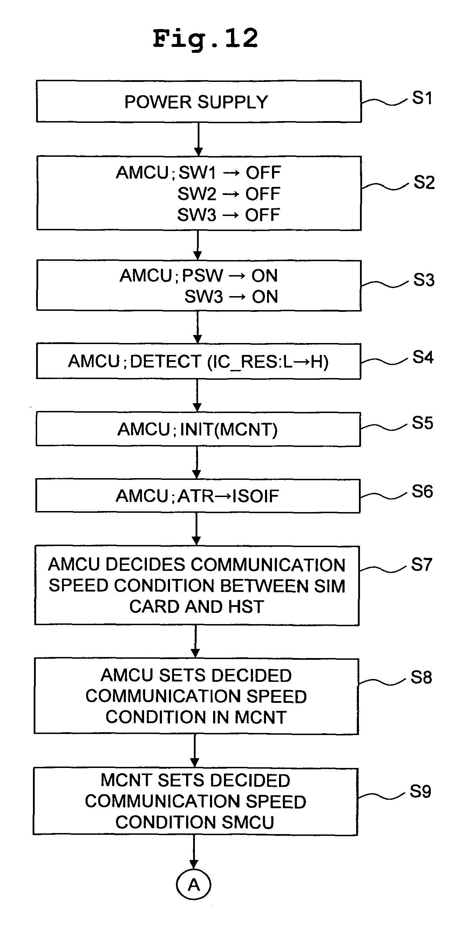

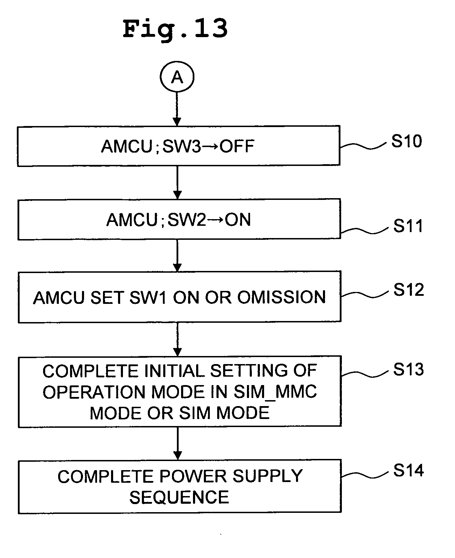

An initialization sequence during power supply is illustrated in Figs. 12 and 13. When operation power is supplied to the power supply terminal IC_VCC of the SIM card 100 (S1), the second microcomputer (AMCU) 113 sets the first switch 108, the second switch 110, and the third switch 112 in the disconnected state (OFF) (S2). Subsequently, the second microcomputer (AMCU) 113 sets φ3 to L (low level) to control the power switch 114 to the connected state (ON) and controls the third switch 112 to the connected state (ON) with the control signal φ3 (S3). Thereafter, the second microcomputer (AMCU) 113 performs operation for detecting that a reset instruction of a reset signal given from the host apparatus 118 to the reset terminal IC_RES is released (L to H) (S4). On the other hand, the second microcomputer (AMCU) 113 applies initialization conforming to an MMC protocol to the memory controller 105 (S5). For example, the second microcomputer (AMCU) 113 sequentially issues an initialize command CMD0, a power supply voltage setting command CMD1, a card ID acquisition command CMD2, a card numbering command CMD3, and a card select command CMD7 and initializes the memory controller 105 to be capable of operating in the MMC mode. Thereafter, on condition that the reset instruction of the reset signal given to the reset terminal IC_RES is released (L to H), the second microcomputer (AMCU) 113 returns an IC card response of ATR (Answer to Reset) to the host apparatus 118 via the data input and output terminal IC_I/O (S6). Thereafter, the second microcomputer (AMCU) 113 performs PPS (Protocol and Parameters Selection) exchange with the host apparatus 118 and decides, in place of the first microcomputer (SMCU) 106, communication speed condition between the SIM card 100 and the host apparatus 118 (S7).

Subsequently, the second microcomputer (AMCU) 113 issues a secure MMC mode command CMD6 to the card controller 105, issues a writing command WRITE_SEC_CMD usable in the secure MMC mode to the card controller 105, and sets a communication speed condition equal to the communication speed condition decided in the PPS exchange in a control register of the card controller 105 or a control data storage area of the flash memory 104 (S8). Subsequently, the card controller 105 transmits a reset signal to the first microcomputer 106 via the third bus 111 to instruct the first microcomputer 106 to perform reset. When a reset operation is instructed, the first microcomputer 106 performs an initialization operation and returns an IC card response of ATR (Answer to Reset) to the card controller 105. The card controller 105 that receives the IC card response performs PPS (Protocol and Parameters Selection) exchange with the first microcomputer (SMCU) 106 and sets a communication speed condition same as the communication speed condition decided earlier (the decided communication speed condition) in the first microcomputer (SMCU) 106 (S9). Consequently, the second microcomputer 113 and the first microcomputer 106 can exchange an IC card command and an IC card response with the host apparatus 118 according to the decided communication speed condition. The second microcomputer 113 and the memory controller 105 can exchange a memory card command and a memory card response according to the decided communication speed condition. The memory controller 105 and the first microcomputer 106 can exchange the IC card command and the IC card response according to the decided communication speed condition.

Thereafter, the second microcomputer 113 sets the third switch 112 in the disconnected state with the signal φ3 (S10) and sets the second switch 110 in the connected state with the control signal φ2 (S11). The second microcomputer 113 sets the first switch 108 in the connected state as required (S12). "As required" means that, for example, in case that a processing routine in step S13 by the second microcomputer 113 controls the first switch 108 to the connected state according to conditional branch, the first switch 108 is set in the connected state according to satisfaction of a predetermined condition and is set in omission (maintains an unconnected state) according to dissatisfaction of the predetermined condition. The predetermined condition is a memory card function use permission condition or the like given from the host apparatus 118. In case that the connected state of the third switch 112 is selected, the SIM card 100 is initially set in the first mode (the SIM_MMC mode). When the third switch 112 maintains the disconnected state, the SIM card 100 is initially set in the second mode (the SIM mode) (S13). Consequently, the power supply sequence is completed (S14).

### «Power supply interruption»

In case that the first switch (SW1) 108 is not set in the connected state (ON) in step S12 in Fig. 13, i.e., when the SIM mode is initially set, the second microcomputer 113 controls the power switch 114 to the OFF state with the control signal φ4. In the SIM mode, the memory card function is substantially unusable. Therefore, it is possible to stop power feed to the usable circuits 105 and 104 to realize low power consumption. In the SIM mode, the first switch 108 is in the disconnected state. Therefore, regardless of what kind of state an input and output circuit of the memory controller 105 connected to the first bus 107 is set according to the interruption of the operation power supply of the memory controller 105, it is possible to prevent occurrence of a state abnormal for the host apparatus 118 such as inflow of an undesired current from the host apparatus 118, which is connected to the memory card interface terminal 101, to the SIM card 100. It is also possible to set any one of the memory controller 105 and the flash memory 104 as a power supply interruption object. A consumed current during standby is larger in the memory controller 105 compared with the flash memory 104. Therefore, in that regard, it is more effective to interrupt a power supply for the memory controller 105 than to interrupt a power supply for the flash memory 104.

### «Transition of the operation mode; SIM_MMC to X_SIM»

A control procedure for transitioning the operation mode from the SIM_MMC mode to the X_SIM mode using a defined IC card command, which can be recognized by the first microcomputer 106, is explained. In the SIM_MMC mode, the first microcomputer 106 gives a mode change instruction signal φ5 to the second microcomputer 113 from a second input and output port (I/O2) in response to input of a defined predetermined first IC card command from the second bus 109. The second microcomputer 113 changes the operation mode to the X_SIM mode in response to the mode change instruction signal φ5. In case that an IC card command defined for the first microcomputer 106 like the first IC card command is present, it is possible to transition the operation mode using the IC card command.

### «Transition of the operation mode; SIM_MMC to X_SIM»

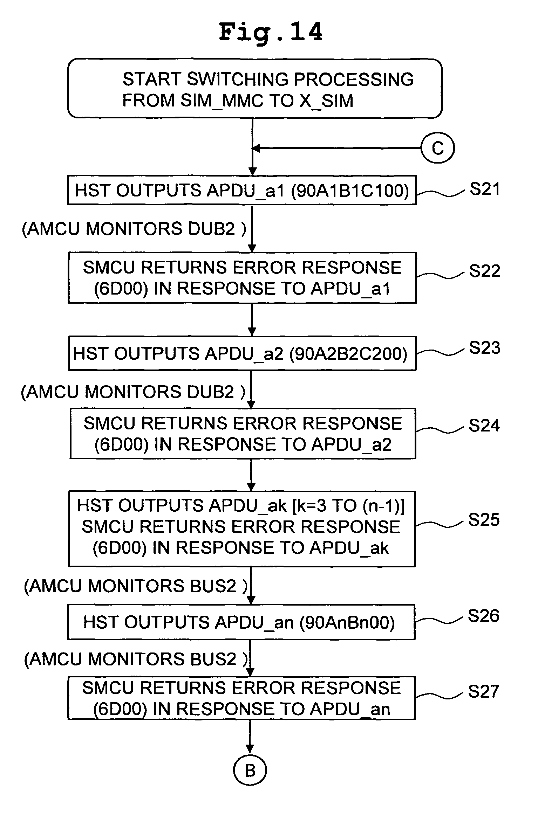

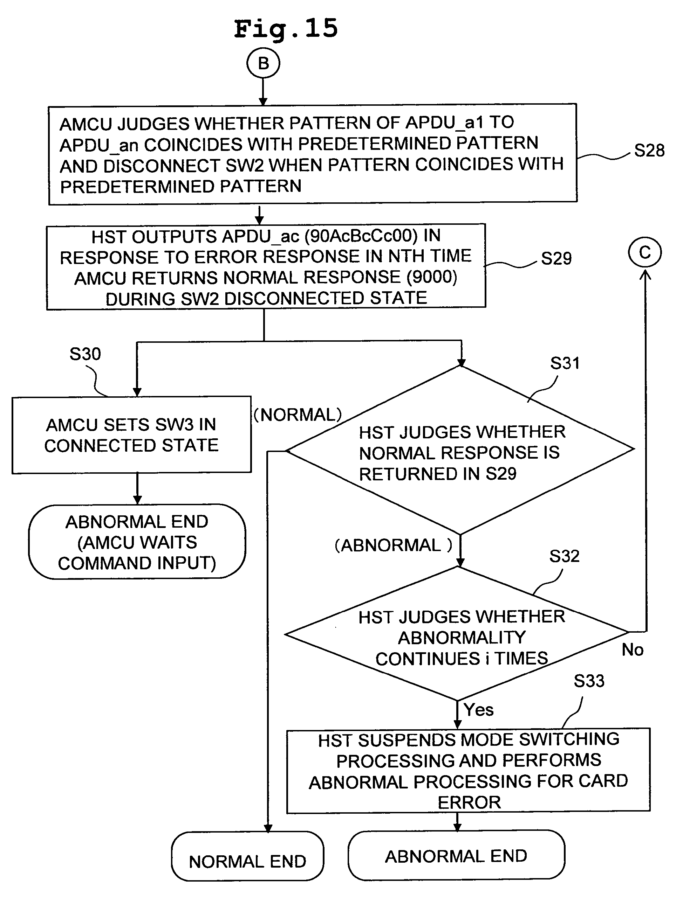

A control procedure for transitioning the operation mode from the SIM_MMC mode to the X_SIM mode using an undefined IC card command is illustrated in Figs. 14 and 15.

First, a command format of the IC card command is explained. Exchange of the IC card command and the IC card response is specified in ISO/IEC7816-4. According to the standard, the IC card command is also referred to as APDU (Application Protocol Data Unit). A format formed by fields such as class, order, parameter, and data is specified in the command. For example, concerning the class as a top byte of the IC card command, "00" means that the IC card command is an IC card command common to all the industries and "90" means that the IC card command is a user defined IC card command.

When it is desired to transition the SIM card 100 from the SIM_MMC to the X_SIM mode, first, the host apparatus 118 supplies a predetermined first undefined IC card command APDU_a1 (e.g., "90 A1 B1 C1 00"), which is determined in advance between the host apparatus 118 and the SIM card 100, to the IC card interface terminal 102 (S21). In the SIM_MMC mode, the second microcomputer 113 monitors a command supplied from the IC card interface terminal 102 to the second bus 109 and accumulates the command therein. While the second microcomputer 113 monitors and accumulates the command, when the first microcomputer 106 detects the first undefined IC card command APDU_a1, the first microcomputer 106 returns a status word "6D 00" from the second bus 109 to the host apparatus 118 as an IC card error response in response to the first undefined IC card command APDU_a1 (S22). The host apparatus 118 supplies the next first undefined command APDU_a2 (e.g., "90 A2 B2 C2 00") to the IC card interface terminal 102 in response to the status word (S23). Similarly, when the first microcomputer 106 detects the first undefined IC card command APDU_a2, the first microcomputer 106 returns the status word "6D 00" from the second bus 109 to the host apparatus 118 as the IC card error response in response to the first undefined IC card command APDU_a2 (S24). Thereafter, every time a first undefined command APDU_ak (e.g., "90 Ak Bk Ck 00") is sequentially supplied from the host apparatus 118, the first microcomputer 106 performs, a predetermined number of times, processing for returning the status word "6D 00" to the host apparatus 118 as the IC card error response (S25). When a first undefined IC card command APDU_an (e.g., "90 An Bn Cn 00") for an nth time, which is the last of the predetermined number of times, is supplied from the host apparatus 118 to the first microcomputer 106 (S26), the first microcomputer 106 returns the status word "6D 00" to the host apparatus 118 as the IC card error response (S27). In case that a monitor result of the first undefined IC card commands APDU_a1 to APDU_an supplied "n" times coincides with a predetermined pattern, the second microcomputer 113 controls the second switch 110 to the disconnected state (S28). The host apparatus 118 supplies another first undefined command APDU_aC (e.g., "90 Ac Bc Cc 00") to the IC card interface terminal 102 for the n+1th time in response to the status word in step S27. When interruption of the second switch 110 is performed in step S28, the second microcomputer 113 that receives the first undefined command APDU_aC returns a status word ("90 00) from the IC card interface terminal 102 to the host apparatus 118 as an IC card normal response (S29). After returning the status word ("90 00) as the normal response, the second microcomputer 113 inverts the control signal φ3 to a low level (L), sets the third switch 112 in the connected state, and switches the operation mode from the SIM_MMC mode to the X_SIM mode (S30). The second microcomputer 113 waits an access command or the like to the flash memory 104 in the X_SIM mode.

When the monitor result does not coincide with the predetermined pattern in step S28, the second microcomputer 113 does not return the status word ("90 00) as the normal response in step S29. The host apparatus 118 judges whether the present status word ("90 00) returned as a response to the first undefined command APDU_aC (e.g., "90 Ac Bc Cc 00") is a normal response ("90 00") (S31). When the present status word is normal, the host apparatus 118 normally finishes the mode switching processing. However, in case that the status word is abnormal, if the present abnormal response has not reached continuous ith time, the host apparatus 118 returns to step S21 and repeats the processing (S32). If the present abnormal response has reached ith time of the specified number of times, the host apparatus 118 interrupts the mode switching processing and performs abnormal processing as a card error (S33). Consequently, the mode switching processing is abnormally finished.

In case that an IC card command defined for the first microcomputer 106 like the first IC card command is not present, it is possible to transition the operation mode from the SIM_MMC mode 9 to the X_SIM mode using the first undefined IC card command.

### «Operation form in the X_SIM mode»

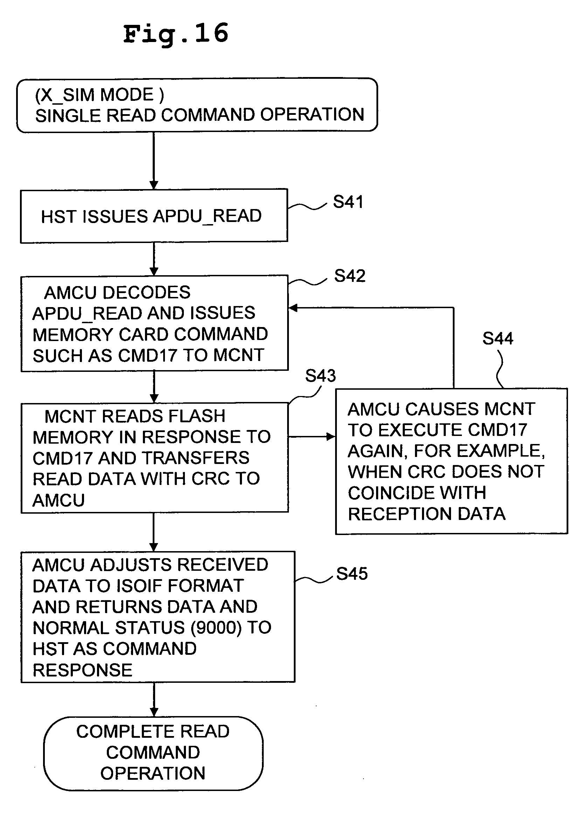

A single read command operation is illustrated in Fig. 16 as one of operation forms in the X_SIM mode. In the X_SIM mode, APDU_READ (90ArBrCrE1E2E3E4L1L2L3) is supplied from the host apparatus 118 to the IC card interface terminal 102 as a second undefined IC card command (S41). The second microcomputer 113 that waits for command supply from the second bus 109 decodes APDU_READ as the second undefined IC card command, outputs, for example, a single read command code (CMD17) and a 32-bit block address argument E1E2E3E4 to the first bus 107 as a first memory card command corresponding to APDU_READ, and supplies the first memory card command to the memory controller 105 (S42). The memory controller 105 accesses the flash memory 104 in response to the single read command (CMD17) and returns, for example, 1-block 512-byte data with CRC (cyclic redundancy checksum) to the second microcomputer 113 (S43). When the CRC does not coincide with reception data, the second microcomputer 112 causes the memory controller 105 to execute the command code CMD17 again (S44). In case that the CRC coincides with the reception data, the second microcomputer 113 adjusts the received 1-block data to a format of an IC card interface and supplies data of the number of bytes designated by L1L2L3 and a normal status (9000) from the IC card interface terminal 102 to the host apparatus 118 (S45).

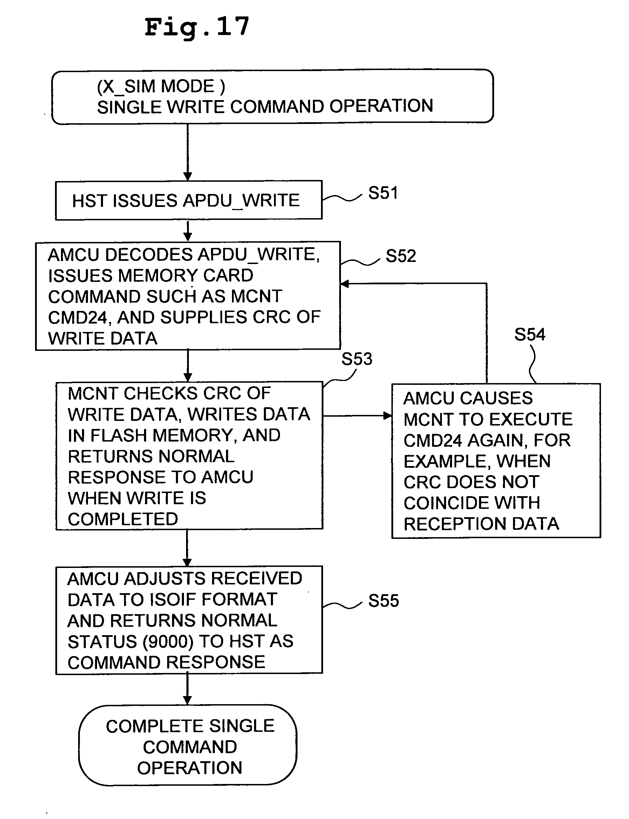

A single write command operation is illustrated in Fig. 17 as another one of the operation forms in the X_SIM mode. In the X_SIM mode, APDU_WRITE (90AwBwCwE1E2E3E4D1toD512L1L2L3) is supplied from the host apparatus 118 to the IC card interface terminal 102 as a second undefined IC card command (S51). The second microcomputer 113 that waits for command supply from the second bus 109 decodes APDU_WRITE as the second undefined IC card command, outputs, for example, a single write command code (CMD24), a 32-bit block address argument E1E2E3E4, a 512-byte write data D1 to D512, and CRC of the write data D1 to D512 to the first bus 107 as a first memory card command corresponding to APDU_WRITE and supplies the first memory card command to the memory controller 105 (S52). The memory controller 105 performs CRC check for the write data D1 to D512 in response to the first memory card command, accesses the flash memory 104, writes, for example, 1-block 512-byte data with CRC in the flash memory 104, and, when the writing is normally completed, returns a normal response to the second microcomputer 113 (S53). When the normal response is not returned because of a CRC check error or the like, the second microcomputer 113 causes the memory controller 105 to execute the command code CMD24 again (S54). When the second microcomputer 113 receives the normal response of writing normal completion from the memory controller 105, the second microcomputer 113 supplies the normal status 9000 of normal writing end from the IC card interface terminal 102 to the host apparatus 118 according to the format of the IC card interface (S55).

If the second undefined IC card command code represented by APDU_READ and APDU_WRITE is used, it is possible to cope with a cooperative operation with the memory controller 105 that cannot be coped with by the IC card command defined for the first microcomputer 106.

### «Transition of the operation mode; X_SIM to SIM_MMC»

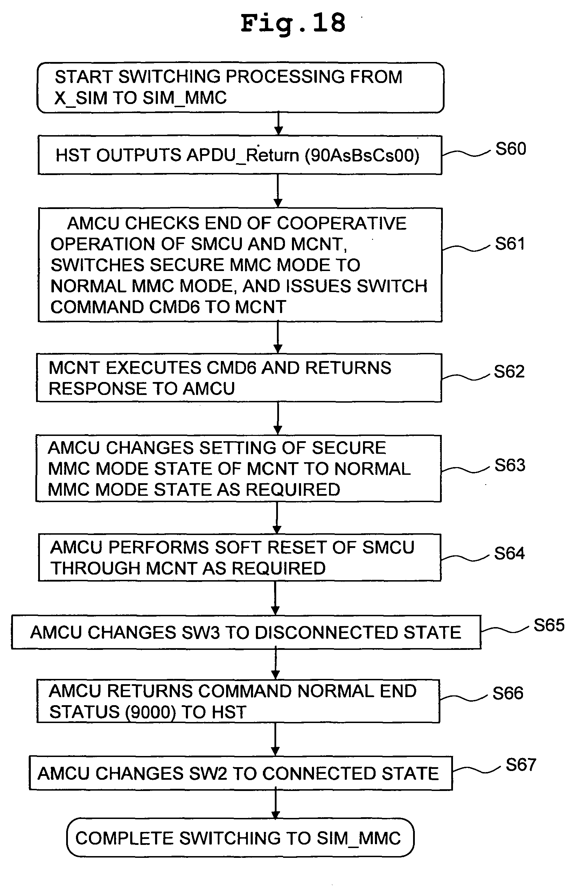

A control procedure for transitioning the operation mode from the X_SIM mode to the SIM_MMC mode using an undefined IC card command is illustrated in Fig. 18.

When it is desired to transition the SIM card 100 from the X_SIM mode to the SIM_MMC mode, first, the host apparatus 118 supplies APDU_Return (e.g., "90 As Bs Cs 00") to the IC card interface terminal 102 as a predetermined third undefined IC card command determined in advance between the host apparatus 118 and the SIM card 100 (S60). In response to the command, the second microcomputer 113 confirms that the memory controller 105 and the first microcomputer 106 do not cooperatively operate via the third bus 111 and then transmits a switch command CMD6 for instructing switching the memory card from the secure MMC mode to the normal MMC mode to the memory controller 105 (S61). The memory controller 105 executes the switch command, switches the memory card mode from the secure MMC mode to the normal MMC mode, and returns a switching end response to the second microcomputer 113 (S62). The second microcomputer 113 changes setting of a state of the memory controller 105, for example, data bit width to that for the normal MMC mode using the memory card command (S63). After completing the setting change necessary for the memory controller 105, the second microcomputer 113 can perform soft reset using the reset signal IC_RES, communication speed change by the PPS exchange, and the like for the first microcomputer 106 via the third bus 111 as required (S64). The second microcomputer 113 controls the control signal φ3 to a high level (H) to change the third switch 112 to the disconnected state and disconnects the memory controller 105 and the first microcomputer 106 (S65). The second microcomputer 113 returns the status 9000 of command normal end to the host apparatus 118 (S66). When abnormality occurs in step S62 or the like, the microcomputer 113 returns a specified error response to the host system 118. The host system performs predetermined error processing. Finally, the second microcomputer 113 sets the port PRT2 in the input mode, inverts the second switch 110 to the connected state (S67), and completes the switching to the SIM_MMC mode. In case that the host apparatus 118 needs to recognize the completion of transition of the operation mode, the host apparatus 118 supplies a predetermined undefined IC card command to the IC card interface terminal 102. In case that normal switching of the operation mode is completed, the second microcomputer 113 only has to return a command response meaning the completion of the normal switching in response to the command, to the host apparatus 118.

According to the processing procedure, it is possible to transition the operation mode from the X_SIM mode to the SIM_MMC mode by using the third undefined IC card command not defined for the first microcomputer 106.

### <<Transition of the operation mode; SIM_MMC to XMC>>

Although not specifically shown in a figure, a control procedure for transitioning the operation mode from the SIM_MMC mode to the XMC mode using a defined IC card command, which can be recognized by the first microcomputer 106, is explained. In the SIM_MMC mode, the first microcomputer 106 gives a mode change instruction signal to the second microcomputer 113 in response to input of a second IC card command from the second bus. The second microcomputer 113 changes the operation mode to the XMC mode in response to the mode change instruction signal. In case that an IC card command defined for the first microcomputer 106 like the second IC card command is present, it is possible to transition the operation mode to the XMC mode using the IC card command. The mode change instruction signal at this point has to be a signal different from the signal φ5 used in changing the operation mode to the X_SIM mode using the first IC card command.

### <<Transition of the operation mode; SIM_MMC to XMC>>

Although not specifically shown in a figure, a control procedure for transitioning the operation mode from the SIM_MMC mode to the XMC mode using an undefined IC card command is explained. A basic processing procedure is the same as the processing procedure explained with reference to Figs. 14 and 15 and is substantially different in that a fourth undefined IC card command is used. In the SIM_MMC mode, the second microcomputer 113 monitors a pattern of the fourth undefined IC card command supplied from the IC card interface terminal 102 to the second bus 109. When the fourth undefined IC card command is supplied from the IC card interface terminal 102 to the second bus 109 a predetermined number of times with respect to an IC card error response such as an IC card error response ("6D 00") returned by the first microcomputer 106 in response to the fourth undefined IC card command, on condition that a result of monitoring performed the predetermined number of times for the supplied fourth undefined IC card command coincides with a predetermined pattern, the second microcomputer 113 outputs an IC card normal response to the second bus 109 and then changes the operation mode to the XMC mode. In case that an IC card command defined for the first microcomputer like the second IC card command is not present, it is possible to transition the operation mode using the fourth undefined IC card command.

### «Operation form of XMC»

In the XMC mode, the memory controller 105 decodes a memory card command supplied from the memory card interface terminal 101 to the first bus 107 and controls access to the flash memory 104 according to a decoding result. The memory controller 105 controls, according to the decoding result, access to the flash memory 104 performed by using a response to an IC card command issued to the first microcomputer 106 and outputs a memory card response to the access control to the first bus 107. It is possible to cope with a cooperative operation by the memory controller 105 and the first microcomputer 106.

### «Transition of the operation mode; XMC to SIM_MMC»

Although not specifically shown in a figure, a control procedure for transitioning the operation mode from the XMC mode to the SIM_MMC mode using an undefined IC card command is explained. A basic processing procedure is practically the same as the processing procedure explained with reference to Fig. 18 and is substantially different in that a fifth undefined IC card command is used. In the XMC mode, in response to input of the fifth undefined IC card command from the second bus 109, the second microcomputer 113 confirms that the memory controller 105 and the first microcomputer 106 do not cooperatively operate via the third bus 111 and then changes the operation mode to the SIM_MMC mode. It is possible to transition the operation mode from the XMC mode to the SIM_MMC mode by using the fifth undefined IC card command not defined for the first microcomputer 106.

The fifth undefined IC command described in this embodiment includes a user defined command for performing a specific operation and normal IC commands in modes other than the XMC mode. The same holds true in the description bellow.

### «XMC mode terminal»

The mode terminal (MD) 115 shown in Fig. 1 is, for example, a mode terminal that can forcibly set the SIM card in the XMC mode. The mode terminal 115 is connected to the memory controller 105 and the signal line for the switch control signal φ3. A predetermined input and output port is allocated to an output of the signal φ3 in the second microcomputer. When the second microcomputer 113 determines an operation mode in initialization processing during power supply, the second microcomputer 113 refers to a state of the mode terminal 115 via the input and output port used for the output of the signal φ3. When the mode terminal 115 is at a low level (in a first state), the second microcomputer 113 sets the operation mode in the SIM_MMC mode according to operation power supply to the SIM card 100 as explained with reference to Figs. 12 and 13. When the mode terminal 115 is at a low level (in a second state), the second microcomputer 113 sets the operation mode in the XMC mode according to operation power supply to the SIM card 100. This is for the purpose of, for example, in case that the SIM card 100 is connected to a host apparatus that does not support a procedure for transition from the SIM_MMC mode to the XMC mode or in case that the SIM card 100 is connected to an interface protocol conversion circuit for converting a USB into an MMC memory card interface, making it possible to initially set the SIM card 100 in the XMC mode supported by the host apparatus such as a PC (Personal Computer) via the interface protocol conversion circuit. As another application of the mode terminal (MD) 115, the mode terminal 115 may be used for forcible mode transition.

### <<Security>>

The flash memory 104 has a normal area as a first nonvolatile storage area and a secure storage area as a second nonvolatile storage area. The memory controller 105 inputs a switch control signal φ3 for the third switch 112, allows access to only the normal storage area in a state in which the third switch 112 instructed to be disconnected by the switch control signal φ3, and allows access to the normal storage area and the secure storage area in a state in which the third switch 112 instructed to be connected by the switch control signal φ3. The memory controller 105 alone eliminates access to the secure storage area. Access to the secure storage area is not allowed unless the memory controller 105 and the first microcomputer 106 are in a cooperatively operable state. Therefore, it is easy to realize security in the secure storage area.

«Conversion of the terminal function» An external interface for the memory card function is not limited to the memory card interface terminal 101. Although not specifically shown in a figure, the SIM card 100 only has to include another interface terminal different from the memory card interface terminal 101 and further include a conversion circuit that converts the terminal function of the memory card interface terminal into a terminal function of the other interface terminal. The conversion circuit is connected to the memory card interface terminal and the other interface terminal. Therefore, an external interface terminal for the memory card interface in the SIM card is not limited to a specific memory card interface and may be another memory card interface or another interface such as a USB.

«Conversion into a non-contact interface function» An external interface for the IC card function is not limited to the contact interface and may be a non-contact interface. Although not specifically shown in a figure, the SIM card 100 only has to include an RF communication terminal different from the IC card interface terminal 102 as an external terminal and further include a conversion circuit that converts the terminal function of the IC card interface terminal 102 into a non-contact interface that uses the RF communication terminal. The conversion circuit is connected to the IC card interface terminal 102 and the RF communication terminal. It is possible to realize the IC card interface function using the non-contact interface.

### «Block diagram of a second SIM card»

A block diagram of a second SIM card 200 as the semiconductor device according to the present invention is shown in Fig. 2.

The SIM card 200 is a semiconductor device that has an IC card function and a memory card function and can associate the functions each other. This SIM card 200 has, for example, a function conforming to Secure MMC 2.0 Interface Layer Specification Version 1.0 MMCA Technical Committee (MultiMediaCard Association, Inc. October 2005) as the memory card function. The SIM card 200 has, for example, a function conforming to ISO/IEC 7816-3 Second edition 1887-12-15, Electric signal and transmission protocols as the IC card function. The SIM card 200 is different from the SIM card 100 in that the second microcomputer 113, the third switch 112, and the third bus 111 are aggregated in a second microcomputer 213. Other basic components are the same as those of the SIM card 100. The SIM card 200 shown in Fig. 2 is explained in detail below centering around the differences from the SIM card 100 shown in Fig. 1.

In order to perform external interface, the SIM card 200 includes, for example, in a card substrate, a memory card interface terminal (MMCIF) 201 used for input and output of a memory card command and a memory card response and an IC card interface terminal (ISOIF) 202 used for input and output of an IC card command and an IC card response. The SIM card 200 includes, on the card substrate, a flash memory (FLASH) 204 as an electrically rewritable nonvolatile memory, a memory controller (MCNT) 205 that controls the flash memory 204 in response to the memory card command and returns the memory card response, and a first microcomputer (SMCU) 206 that operates in response to the IC card command and returns the IC card response. The SIM card 200 further includes the second microcomputer (AMCU) 213 connected to the memory card controller 205 by using a first port (PRT1), a first bus (BUS1) 207 that connects the memory card interface terminal 201 used for input and output of the memory card command and the memory card response, the memory controller 205, and a second port (PRT2) of the second microcomputer, a first switch 208 (SW1) that selectively sets the first bus 207 in a disconnected state from the memory card interface terminal 201, a second bus 209 (BUS2) that connects the IC card interface terminal 202 used for input and output of the IC card command and the IC card response and a third port (PRT3) of the second microcomputer 213, a third bus 212 (BUS3) that connects a fourth port (PRT4) of the second microcomputer 213 and the first microcomputer 206, and a second switch 210 (SW2) that selectively connects the second bus and the third bus. The second microcomputer 213 controls an operation mode of the SIM card 200 and controls arbitration and cooperation of the IC card function and the memory card function. Reference signs φ1 and φ2 denote switch control signals for the first switch 208 and the second switch 210. The switch control signals are outputted from a predetermined port of the second microcomputer 213. Reference numeral 214 denotes a power switch controlled to be switched by a control signal φ4. Reference numeral 215 denotes a mode terminal connected to the second microcomputer and is used in the same manner as the mode terminal 115.

The SIM card 200 has first to fourth modes as operation modes selectable through the control by the second microcomputer 213. The first mode (SIM_MMC) is an operation mode in which, with the second switch 210 (SW2) and the first switch 208 (SW1) set in a connected state, an operation of the memory controller 205 responding to the memory card command from the memory card interface terminal 201 and an operation of the first microcomputer 206 responding to the IC card command from the IC card interface terminal 202 can be separately performed. The second mode (SIM) is an operation mode in which, with the first switch 208 (SW1) set in a disconnected state and the second switch 210 (SW2) set in the connected state, an operation of the first microcomputer 206 responding to the IC card command from the IC card interface terminal 202 can be performed. The third mode (X_SIM) is an operation mode in which, with the first switch 208 set in the disconnected state and the second switch 210 set in the connected state, the memory controller 205 and the first microcomputer 206 can be actuated by using the first port PRT1, the third port PRT3, and the fourth port PRT4 in response to an undefined IC card command from the IC card interface terminal 202. The fourth mode (XMC) is an operation mode in which, with the first switch 208 set in the connected state and the second switch 210 set in the disconnected state, the memory controller 205 and the first microcomputer 206 can be actuated by using the first port PRT1 and the fourth port PRT4 in response to the memory card command from the memory card interface terminal 201.

With the SIM card 200, in the first mode (SIM_MMC), the IC card function and the memory card function can be used independently from each other. It is possible to realize backward compatibility with respect to a host apparatus corresponding to subordinate SIM cards having independent IC card functions and memory card functions, respectively. The second mode (SIM) is useful for restricting the host apparatus 218 from freely using the memory card function completely irrelevantly to the IC card function. The third mode (X_SIM) makes it possible to use the memory card function using the IC card command and, in particular, makes it possible to use a security function by the first microcomputer 206 for memory access control by the memory controller 205. The fourth mode (XMC) makes it possible to use the security function by the first microcomputer 206 for memory access control by the memory controller 205 using the memory card command. Since the first to fourth modes are selectable through the control by the second microcomputer 213, convenience of the SIM card 200 is improved.

### «Initialization operation during power supply»

The second microcomputer 213 sets the first mode (SIM_MMC) or the second mode (SIM) according to operation power supply to the SIM card 200. In terms of backward compatibility with respect to a host apparatus corresponding to subordinate SIM cards having independent IC card functions or memory card functions, respectively, it is desirable to automatically set the SIM card 200 in the first mode or the second mode in processing for responding to power supply. Otherwise, since a subordinate host apparatus is required to perform special processing to transition to the first mode or the second mode, it is difficult to realize backward compatibility. In particular, it is advisable to select the second mode as an initial operation mode in case that it is desired to restrict the host apparatus 218 from freely using the memory card function completely irrelevantly to the IC card function. An initialization sequence during power supply is practically the same as the processing shown in Figs. 12 and 13. Therefore, detailed explanation of the initialization sequence is omitted.

### «Power supply interruption»

When the first switch (SW1) 208 is not set in the connected state (ON) in the processing step S12 in Fig. 13, i.e., when the SIM mode is initially set, the second microcomputer 213 controls the power switch 214 to the OFF state with the control signal φ4. In the SIM mode, the memory card function is substantially unusable. Therefore, it is possible to stop power feed to the usable circuits 205 and 204 to realize low power consumption. In the SIM mode, the first switch 208 is in the disconnected state. Therefore, regardless of what kind of state an input and output circuit of the memory controller 205 connected to the first bus 207 is set according to the interruption of the operation power supply of the memory controller 205, it is possible to prevent occurrence of a state abnormal for the host apparatus 218 such as inflow of an undesired current from the host apparatus 218, which is connected to the memory card interface terminal 201, to the SIM card 200. It is also possible to set any one of the memory controller 205 and the flash memory 204 as a power supply interruption object. A consumed current during standby is larger in the memory controller 205 compared with the flash memory 204. Therefore, in that regard, it is more effective to interrupt a power supply for the memory controller 205 than to interrupt a power supply for the flash memory 204.

### «Transition of the operation mode; SIM_MMC to X_SIM»

A control procedure for transitioning the operation mode from the SIM_MMC mode to the X_SIM mode using a defined IC card command, which can be recognized by the first microcomputer 206, is explained. In the SIM_MMC mode, the first microcomputer 206 gives a mode change instruction signal φ5 to the second microcomputer 213 in response to input of the first IC card command from the second bus 209. The second microcomputer 213 sets the X_SIM mode in response to the mode change instruction signal φ5. In case that an IC card command defined for the first microcomputer 206 like the first IC card command is present, it is possible to transition the operation mode using the IC card command.

### «Transition of the operation mode; SIM_MMC to X_SIM»

A control procedure for transitioning the operation mode from the SIM_MMC mode to the X_SIM mode using an undefined IC card command is explained. The control procedure is practically the same as the procedure explained with reference to Figs. 14 and 15. Therefore, although not specifically shown in a figure, in the SIM_MMC mode, the second microcomputer 213 monitors, from the third port PRT3, a pattern of the first undefined IC card command supplied from the IC card interface terminal 202 to the second bus 209. When the first undefined IC card command is supplied from the IC card interface terminal 202 to the second bus 209 a predetermined number of times with respect to an IC card error response returned by the first microcomputer 206 in response to the first undefined IC card command, on condition that a result of monitoring performed the predetermined number of times for the supplied first undefined IC card command coincides with a predetermined pattern, the second microcomputer 213 outputs an IC card normal response from the third port PRT3 to the outside via the IC card interface terminal 202 and changes the operation mode to the X_SIM mode. In case that an IC card command defined for the first microcomputer 206 like the first IC card command is not present, it is possible to transition the operation mode using the first undefined IC card command.

### «Operation form in the X_SIM mode»

In the X_SIM mode, operations represented by a single read command operation and a single write command operation practically the same as those explained with reference to Figs. 16 and 17 are performed. Although not specifically shown in a figure, in the X_SIM mode, the second microcomputer 206 decodes a second undefined IC card command supplied from the IC card interface terminal 202 to the third port PRT3 via the second bus 209 and issues a first memory card command to the memory card controller 205. The second microcomputer 206 converts a first memory card response returned from the memory controller 205 as a processing result responding to the first memory card command into a predetermined IC card response and outputs the IC card response to the second bus 209 from the third port ORT3. It is possible to cope with a cooperative operation with the memory controller that cannot be coped with by the IC card command defined for the first microcomputer 206.

### «Transition of the operation mode; X_SIM to SIM_MMC»

A control procedure for transitioning the operation mode from the X_SIM mode to the SIM_MMC mode using an undefined IC card command is practically the same as the procedure explained with reference to Fig. 18. An overview of the control procedure is explained. In the X_SIM mode, in response to input of a third undefined IC card command from the second bus 209 to the third port PRT3, the second microcomputer 213 confirms that the memory controller 205 and the first microcomputer 206 do not cooperatively operate via the first port PRT1 and the fourth port PRT4 and then changes the operation mode to the SIM_MMC mode. It is possible to transition the operation mode by using the third undefined IC card command not defined for the first microcomputer 206.

### «Transition of the operation mode; SIM_MMC to XMC»

Although not specifically shown in a figure, a control procedure for transitioning the operation mode from the SIM_MMC mode to the XMC mode using a defined IC card command, which can be recognized by the first microcomputer 206, is explained. In the SIM_MMC mode, in response to input of a second IC card command from the second bus 209, the first microcomputer 206 gives a mode change instruction signal to the second microcomputer 213. The second microcomputer 213 changes the operation mode to the XMC mode in response to the mode change instruction signal. In case that an IC card command defined for the first microcomputer 206 like the second IC card command is present, it is possible to transition the operation mode using the IC card command. The mode change instruction signal at this point has to be a signal different from the signal φ5 used in changing the operation mode to the X_SIM mode using the first IC card command.

### «Transition of the operation mode; SIM_MMC to XMC»

Although not specifically shown in a figure, a control procedure for transitioning the operation mode from the SIM_MMC mode to the XMC mode using an undefined IC card command is explained. A basic processing procedure is the same as the processing procedure explained with reference to Figs. 14 and 15 and different in that a fourth undefined IC card command is used. In the SIM_MMC mode, the second microcomputer 213 monitors a pattern of the fourth undefined IC card command supplied from the IC card interface terminal 202 to the third port PRT3 via the second bus 209. When the fourth undefined IC card command is supplied from the IC card interface terminal 202 to the second bus 209 a predetermined number of times with respect to an IC card error response returned by the first microcomputer 206 in response to the fourth undefined IC card command, on condition that a result of monitoring performed the predetermined number of times for the supplied fourth undefined IC card command coincides with a predetermined pattern, the second microcomputer 213 outputs an IC card normal response to the second bus 209 and then changes the operation mode to the X_MC mode. In case that an IC card command defined for the first microcomputer 206 like the second IC card command is not present, it is possible to transition the operation mode using the fourth undefined IC card command.

### «Operation form of XMC»

An operation form in the XMC mode is practically the same as that in the case of the SIM card 100. In the XMC mode, the memory controller 205 decodes a memory card command supplied from the memory card interface terminal 201 to the first bus 208 and controls access to the nonvolatile memory according to a decoding result. The memory controller 205 controls, according to the decoding result, access to the flash memory 204 performed by using a response to an IC card command issued to the first microcomputer 206 and outputs a memory card response to the access control to the first bus 208. It is possible to cope with a cooperative operation by the memory controller 205 and the first microcomputer 206.

### «Transition of the operation mode; XMC to SIM_MMC»

Although not specifically shown in a figure, a control procedure for transitioning the operation mode from the XMC mode to the SIM_MMC mode using an undefined IC card command is explained. A basic processing procedure is practically the same as the processing procedure explained with reference to Fig. 18 and is different in that a fifth undefined IC card command is used. In the X_MC mode, in response to input of the fifth undefined IC card command from the second bus 209, the second microcomputer 213 confirms that the memory controller 205 and the first microcomputer 206 do not cooperatively operate via the first port ORT1 and the fourth port PRT4 and then changes the operation mode to the SIM_MMC mode. It is possible to transition the operation mode by using the fifth undefined IC card command not defined for the first microcomputer 206.

### «XMC mode terminal»

The mode terminal (MD) 215 shown in Fig. 2 is, for example, a mode terminal that can forcibly set the SIM card in the XMC mode. The mode terminal 215 is coupled to the second microcomputer 213. In initialization processing during power supply, the second microcomputer 213 refers to a state of the mode terminal 215 in determining an operation mode. When the mode terminal 215 is at a low level (in a first state), the second microcomputer 213 sets the operation mode in the SIM_MMC mode as explained above in response to operation power supply to the SIM card 200. When the mode terminal 215 is at a low level (in a second state), the second microcomputer 213 sets the operation mode in the XMC mode in response to operation power supply to the SIM card 200. This is for the purpose of, for example, in case that the SIM card 200 is connected to a host apparatus that does not support a procedure for transition from the SIM_MMC mode to the XMC mode or in case that the SIM card 200 is connected to an interface protocol conversion circuit that converts a USB into an MMC memory card interface, making it possible to initially set the SIM card 200 in the XMC mode supported by the host apparatus such as a PC (Personal Computer) via the interface protocol conversion circuit. As another application of the mode terminal (MD) 215, the mode terminal may be used for forcible mode transition.

### «Security»

The flash memory 204 has a normal area as a first nonvolatile storage area and a secure storage area as a second nonvolatile storage area. The memory controller 205 allows access to only the normal storage area in the SIM_MMC mode and the SIM mode. The memory controller 205 allows access to the normal storage area and the secure storage area in the X_SIM mode and the XMC mode. The memory controller 205 alone eliminates access to the secure storage area. Access to the secure storage area is not allowed unless the memory controller 205 and the first microcomputer 206 are in a cooperatively operable state. Therefore, it is easy to realize security in the secure storage area.

Conversion of the terminal function with respect to the memory card interface function and conversion from the contact interface function to the non-contact interface function of the IC card interface are completely the same as those in the case of the SIM card 100. Therefore, detailed explanation of the conversion is omitted.

### «Block diagram of a third SIM card»

A block diagram of a third SIM card 300 as the semiconductor device according to the present invention is shown in Fig. 3.

The SIM card 300 is a semiconductor device that has an IC card function and a memory card function and can associate the functions each other. This SIM card 300 has, for example, a function conforming to Secure MMC 2.0 Interface Layer Specification Version 1.0 MMCA Technical Committee (MultiMediaCard Association, Inc. October 2005) as the memory card function. The SIM card 300 has, for example, a function conforming to ISO/IEC 7816-3 Second edition 1887-12-15, Electric signal and transmission protocols as the IC card function. The SIM card 300 is different from the SIM card 100 in that a second microcomputer (SMCU) 306 exclusively used for the IC card function and a third microcomputer (MMCU) 320 exclusively used for the memory card function are separately provided and, therefore, the third bus 111 and the third switch 112 are removed. Other basic components are the same as those of the SIM card 100. The SIM card 300 shown in Fig. 3 is explained in detail below centering around the differences from the SIM card 100 shown in Fig. 1.

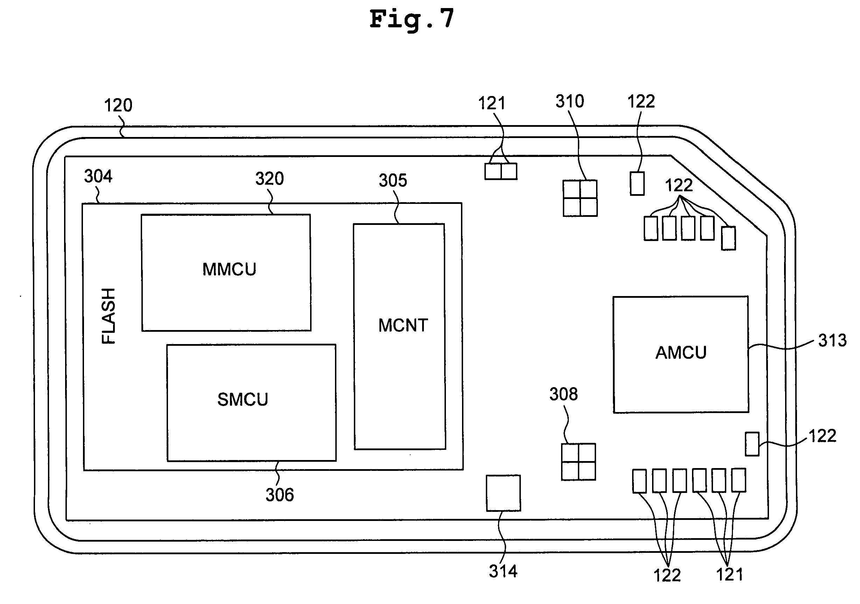

In order to perform external interface, the SIM card 300 includes, for example, in a card substrate, a memory card interface terminal (MMCIF) 301 used for input and output of a memory card command and a memory card response and an IC card interface terminal (ISOIF) 302 used for input and output of an IC card command and an IC card response. The SIM card 300 includes, on the card substrate, a flash memory (FLASH) 304 as an electrically rewritable nonvolatile memory, a memory controller (MCNT) 305 that controls the flash memory 304 in response to the memory card command and returns the memory card response, and a first microcomputer (SMCU) 306 that operates in response to the IC card command and returns the IC card response. The SIM card 300 includes a first bus 307 (BUS1) that connects the memory card interface terminal 301 and the memory controller 305, a first switch 308 (SW1) arranged along the first bus 307, a second bus 309 (BUS2) that connects the IC card interface terminal 302 and the first microcomputer 306, and a second switch 310 (SW2) arranged along the second bus 109. The SIM card 300 further includes a second microcomputer (AMCU) 313 connected to the second bus 309 between the IC card interface terminal 302 and the second switch 310 and connected to the first bus 307 between the first switch 308 and the memory controller 305 and a third microcomputer (MMCU) 320 connected to the memory controller 305. The second microcomputer 313 controls an operation mode of the SIM card 300 and controls arbitration and cooperation of the IC card function and the memory card function. Reference signs φ1 and φ2 denote switch control signals for the first switch 308 and the second switch 310. The switch control signals are outputted from a predetermined port of the second microcomputer 313. Reference numeral 314 denotes a power switch controlled to be switched by the control signal φ4. Reference numeral 315 denotes a mode terminal connected to the second microcomputer. The mode terminal 315 is used in the same manner as the mode terminal 115. A mounting layout of circuit modules in the SIM card 300 is illustrated in Fig. 7 in a state in which a lid is removed. Fig. 7 is different from Fig. 6 in that chips of the first microcomputer 306 and the second microcomputer 320 are stacked on chips of the flash memory 304. Otherwise, Fig. 7 is the same as Fig. 6.

The SIM card 300 has first to fourth modes as operation modes selectable through the control by the second microcomputer 313. The first mode (SIM_MMC) is an operation mode in which, with the first switch 308 and the second switch 310 set in a connected state, an operation of the memory controller 305 responding to the memory card command from the memory card interface terminal 301 and an operation of the first microcomputer 306 responding to the IC card command from the IC card interface terminal 302 can be separately performed. The second mode (SIM) is an operation mode in which, with the first switch 308 set in a disconnected state and the second switch 310 set in the connected state, an operation of the first microcomputer 306 responding to the IC card command from the IC card interface terminal 301 can be performed. The third mode (X_SIM) is an operation mode in which, with the first switch 308 set in the disconnected state and the second switch 310 set in the connected state, using the first port PRT1 and the second port PRT2, the memory controller 305 and the third microcomputer 320 can be actuated in response to an undefined IC card command from the IC card interface terminal 302. The fourth mode (XMC) is an operation mode in which, with the second switch 310 set in the disconnected state and the first switch 308 set in the connected state, the memory controller 305 and the third microcomputer 320 can be actuated in response to the memory card command from the memory card interface terminal 301.

With the SIM card 300, in the SIM_MMC mode, the IC card function and the memory card function can be used independently from each other. It is possible to realize backward compatibility with respect to a host apparatus corresponding to subordinate SIM cards having independent IC card functions and memory card functions, respectively. The SIM mode is useful for restricting the host apparatus from freely using the memory card function completely irrelevantly to the IC card function. The X_SIM mode makes it possible to use the memory card function using the IC card command and, in particular, makes it possible to use a security function by the third microcomputer 320 for memory access control by the memory controller 305. The XMC mode makes it possible to use the security function by the third microcomputer 320 for memory access control by the memory controller 305 using the memory card command. Since the first to fourth modes are selectable through the control by the second microcomputer 313, convenience of the SIM card 300 is improved.

### «Initialization operation during power supply»

The second microcomputer 313 sets the first mode (SIM_MMC) or the second mode (SIM) according to operation power supply to the SIM card 300. In terms of backward compatibility with respect to a host apparatus corresponding to subordinate SIM cards having independent IC card functions or memory card functions, respectively, it is desirable to automatically set the SIM card 300 in the first mode or the second mode in processing for responding to power supply. Otherwise, since a subordinate host apparatus is required to perform special processing to transition to the first mode or the second mode, it is difficult to realize backward compatibility. In particular, it is advisable to select the second mode as an initial operation mode in case that it is desired to restrict the host apparatus 318 from freely using the memory card function completely irrelevantly to the IC card function. An initialization sequence during power supply is practically the same as the processing shown in Figs. 12 and 13. Therefore, detailed explanation of the initialization sequence is omitted.

### <<Power supply interruption>>

In case that the first switch (SW1) 308 is not set in the connected state (ON) in the processing step S12 in Fig. 13, i.e., when the SIM mode is initially set, the second microcomputer 313 controls the power switch 314 to the OFF state with the control signal φ4. In the SIM mode, the memory card function is substantially unusable. Therefore, it is possible to stop power feed to the usable circuits 305, 304, and 320 to realize low power consumption. In the SIM mode, the first switch 308 is in the disconnected state. Therefore, regardless of what kind of state an input and output circuit of the memory controller 305 connected to the first bus 307 is set according to the interruption of the operation power supply of the memory controller 305, it is possible to prevent occurrence of a state abnormal for the host apparatus 318 such as inflow of an undesired current from the host apparatus 318, which is connected to the memory card interface terminal 301, to the SIM card 300. It is also possible to set any one of the memory controller 305, the flash memory 304, and a part of the third microcomputer 320 as a power supply interruption object. A consumed current during standby is larger in the memory controller 305 and the third microcomputer 320 compared with the flash memory 304. Therefore, in that regard, it is more effective to interrupt a power supply for the memory controller 205 and the third microcomputer 320 than to interrupt a power supply for the flash memory 304.

### «Transition of the operation mode; SIM_MMC to X_SIM»

A control procedure for transitioning the operation mode from the SIM_MMC mode to the X_SIM mode using a defined IC card command, which can be recognized by the first microcomputer 306, is explained. In the SIM_MMC mode, the first microcomputer 306 gives a mode change instruction signal φ5 to the second microcomputer 313 in response to input of the first IC card command from the second bus 309. The second microcomputer 313 changes the operation mode to the X_SIM mode in response to the mode change instruction signal φ5. In case that an IC card command defined for the first microcomputer 306 like the first IC card command is present, it is possible to transition the operation mode using the IC card command.

### «Transition of the operation mode; SIM_MMC to X_SIM»

A control procedure for transitioning the operation mode from the SIM_MMC mode to the X_SIM mode using an undefined IC card command is explained. The control procedure is practically the same as the procedure explained with reference to Figs. 14 and 15. Therefore, although not specifically shown in a figure, in the SIM_MMC mode, the second microcomputer 313 monitors a pattern of the first undefined IC card command supplied from the IC card interface terminal 302 to the second bus 309. When the first undefined IC card command is supplied from the IC card interface terminal 302 to the second bus 309 a predetermined number of times with respect to an IC card error response returned by the first microcomputer 306 in response to the first undefined IC card command, if a result of monitoring performed the predetermined number of times for the supplied first undefined IC card command coincides with a predetermined pattern, the second microcomputer 313 outputs an IC card normal response from the IC card interface terminal 302 to the outside and changes the operation mode to the X_SIM mode. In case that an IC card command defined for the first microcomputer 306 like the first IC card command is not present, it is possible to transition the operation mode using the first undefined IC card command.

### «Operation form in X_SIM»

In the X_SIM mode, operations represented by a single read command operation and a single write command operation practically the same as those explained with reference to Figs. 16 and 17 are performed. Although not specifically shown in a figure, in the X_SIM mode, the second microcomputer 313 decodes a second undefined IC card command supplied from the IC card interface terminal 302 to the second bus 309 and issues a first memory card command to the memory card controller 305. The second microcomputer 313 converts a first memory card response returned from the memory controller 305 as a processing result responding to the first memory card command into a predetermined IC card response and outputs the IC card response to the second bus 309. It is possible to cope with a cooperative operation with the memory controller 305 that cannot be coped with by the IC card command defined for the first microcomputer 306.

### «Transition of the operation mode; X_SIM to SIM_MMC»

A control procedure for transitioning the operation mode from the X_SIM mode to the SIM_MMC mode using an undefined IC card command is practically the same as the procedure explained with reference to Fig. 18. An overview of the control procedure is explained. In the X_SIM mode, in response to input of a third undefined IC card command from the second bus 309, the second microcomputer 313 confirms that the memory controller 305 and the third microcomputer 320 do not cooperatively operate and then changes the operation mode to the SIM_MMC mode. It is possible to transition the operation mode by using the third undefined IC card command not defined for the first microcomputer 306.

### «Transition of the operation mode; SIM_MMC to XMC»

Although not specifically shown in a figure, a control procedure for transitioning the operation mode from the SIM_MMC mode to the XMC mode using a defined IC card command, which can be recognized by the first microcomputer 306, is explained. In the SIM_MMC mode, in response to input of a second IC card command from the second bus 309, the first microcomputer 306 gives a mode change instruction signal to the second microcomputer 313. The second microcomputer 313 changes the operation mode to the XMC mode in response to the mode change instruction signal. In case that an IC card command defined for the first microcomputer 306 like the second IC card command is present, it is possible to transition the operation mode using the IC card command. The mode change instruction signal at this point has to be a signal different from the signal φ5 used in changing the operation mode to the X_SIM mode using the first IC card command.

### «Transition of the operation mode; SIM_MMC to XMC»

Although not specifically shown in a figure, a control procedure for transitioning the operation mode from the SIM_MMC mode to the XMC mode using an undefined IC card command is explained. A basic processing procedure is the same as the processing procedure explained with reference to Figs. 14 and 15 and different in that a fourth undefined IC card command is used. In the SIM_MMC mode, the second microcomputer 313 monitors a pattern of the fourth undefined IC card command supplied from the IC card interface terminal 302 to the second bus 309. When the fourth undefined IC card command is supplied from the IC card interface terminal 302 to the second bus 309 a predetermined number of times with respect to an IC card error response returned by the first microcomputer 306 in response to the fourth undefined IC card command, on condition that a result of monitoring performed the predetermined number of times for the supplied fourth undefined IC card command coincides with a predetermined pattern, the second microcomputer 313 outputs an IC card normal response to the second bus 309 and then changes the operation mode to the XMC mode. In case that an IC card command defined for the first microcomputer 306 like the second IC card command is not present, it is possible to transition the operation mode using the fourth undefined IC card command.

### «Operation form of XMC»

An operation form in the XMC mode is practically the same as that in the case of the SIM card 100. In the XMC mode, the memory controller 305 decodes a memory card command supplied from the memory card interface terminal 301 to the first bus 307 and controls access to the flash memory 304 according to a decoding result. The memory controller 305 controls, according to the decoding result, access to the flash memory 304 performed by using a response to an IC card command issued to the third microcomputer 320 and outputs a memory card response to the access control to the first bus 307. It is possible to cope with a cooperative operation by the memory controller 305 and the third microcomputer 320.

### «Transition of the operation mode; XMC to SIM_MMC»

Although not specifically shown in a figure, a control procedure for transitioning the operation mode from the XMC mode to the SIM_MMC mode using an undefined IC card command is explained. A basic processing procedure is practically the same as the processing procedure explained with reference to Fig. 18 and is different in that a fifth undefined IC card command is used. In the X_MC mode, in response to input of the fifth undefined IC card command from the second bus 309, the second microcomputer 313 confirms that the memory controller 305 and the third microcomputer 320 do not cooperatively operate and then changes the operation mode to the SIM_MMC mode. It is possible to transition the operation mode by using the fifth undefined IC card command not defined for the first microcomputer 306.

### «XMC mode terminal»

The mode terminal (MD) 315 shown in Fig. 3 is, for example, a mode terminal that can forcibly set the SIM card in the XMC mode. The mode terminal 315 is coupled to the second microcomputer 313. In initialization processing during power supply, the second microcomputer 313 refers to a state of the mode terminal 315 in determining an operation mode. When the mode terminal 315 is at a low level (in a first state), the second microcomputer 313 sets the operation mode in the SIM_MMC mode as explained above in response to operation power supply to the SIM card 300. When the mode terminal 315 is at a low level (in a second state), the second microcomputer 313 sets the operation mode in the XMC mode in response to operation power supply to the SIM card 300. This is for the purpose of, for example, in case that the SIM card 300 is connected to a host apparatus that does not support a procedure for transition from the SIM_MMC mode to the XMC mode or in case that the SIM card 300 is connected to an interface protocol conversion circuit that converts a USB into an MMC memory card interface, making it possible to initially set the SIM card 300 in the XMC mode supported by the host apparatus such as a PC (Personal Computer) via the interface protocol conversion circuit. As another application of the mode terminal (MD) 315, the mode terminal may be used for forcible mode transition.

### «Security»

The flash memory 304 has a normal area as a first nonvolatile storage area and a secure storage area as a second nonvolatile storage area. The memory controller 305 allows access to only the normal storage area in the SIM_MMC mode and the SIM mode. The memory controller 305 allows access to the normal storage area and the secure storage area in the X_SIM mode and the XMC mode. The memory controller 305 alone eliminates access to the secure storage area. Access to the secure storage area is not allowed unless the memory controller 305 and the third microcomputer 320 are in a cooperatively operable state. Therefore, it is easy to realize security in the secure storage area.

Conversion of the terminal function with respect to the memory card interface function and conversion from the contact interface function to the non-contact interface function of the IC card interface are completely the same as those in the case of the SIM card 100. Therefore, detailed explanation of the conversion is omitted.

An example different from the interface terminal shown in Fig. 4 is shown in Fig. 5. In Fig. 5, IC card interface terminals 302 are the same as those shown in Fig. 4. Memory card interface terminals 301 shown in Fig. 5 adopt a terminal array in which a data input and output bit number is extendable to plural bits. It is taken into account that a memory interface mode of data 1 bit can be selected with respect to a host apparatus corresponding to the terminal array shown in Fig. 4. In a card substrate, DAT_MMC (C4) is coupled to DAT0, CMD_MMC (C8) is coupled to CMD, and CLK_MMC (C6) is coupled to CLK. Concerning a power supply terminal, if operation power supply voltages of a semiconductor chip exclusively used for the memory card function and a semiconductor chip exclusively used for the IC card function are the same, IC_VCC (C1) and VCC only have to be connected as shown in the figure. However, when the operation power supply voltages are different, it is necessary to electrically separate IC_VCC (C1) and VCC. MD represents the terminal 115 (215, 315) for selecting the modes. The other terminals are formed as auxiliary extension terminals RSV.

These extension terminals may be exposed. However, until the extension terminals are used, the extension terminals may be covered with an insulating material such as solder resist or a seal and set in an unusable state. This makes it possible to prevent an unintended malfunction in case that the extension terminals are not used.

It is also possible to use these extension terminals RSV as test terminals of the flash memory 104. It is possible to efficiently perform a test for a semiconductor device after mounting. When the memory controller 105 is disabled to perform operation for memory control by electrostatic destruction or the like, it is possible to directly perform access control to the flash memory 104 from the outside via the test terminals. Consequently, if data is left in the flash memory 104, it is possible to easily recover the data. In case that these extension terminals RSV are used as test terminals, the extension terminals RSV are covered with the insulating material such as solder resist and a seal explained above.

The invention devised by the inventor has been specifically explained on the basis of the embodiment. However, the present invention is not limited to the embodiment. It goes without saying that the embodiment can be variously changed without departing from the spirit of the invention.

For example, it is not essential that the first microcomputer used for the IC card function is authenticated by the evaluation and authentication organization of ISO/IEC15408. The semiconductor device according to the present invention is not limited to the application to the cellular phone of the GSM standard. The semiconductor device is also applicable to cellular phones of 3G, W-CDMA, CDMA2001X, and the like. Moreover, the present invention is not limited to the application to the cellular phones and can be widely applied to cash cards, commuter tickets and prepaid cards for transportation facilities, credit cards, other cards for communication or ID cards, and the like. The circuit modules such as the microcomputer (AMCU) and the memory controller (MCNT) configuring the SIM card are not limited to be configured by separate chips, respectively, as illustrated in Figs. 1 to 3. It is also possible to aggregate appropriate plural chips or circuits in one chip. For example, in Fig. 2, it is also possible to configure the microcomputer 213 and the switch 210 with one chip and configure the memory controller 205 and the flash memory 204 with one chip. In Fig. 1, it is not impossible to configure all the circuits other than the flash memory 104 with one chip.

### INDUSTRIAL APPLICABILITY

The present invention can be widely applied to cellular phones, cash cards, commuter tickets and prepaid cards for transportation facilities, credit cards, other cards for communication or ID cards, and the like.

## Claims

1. A semiconductor device comprising:
an electrically rewritable nonvolatile memory;
a memory controller that controls the nonvolatile memory in response to a memory card command and returns a memory card response;
a first microcomputer that operates in response to an IC card command and returns an IC card response;
a first bus that connects a memory card interface terminal used for input and output of the memory card command and the memory card response and the memory controller;
a first switch arranged along the first bus;
a second bus that connects an IC card interface terminal used for input and output of the IC card command and the IC card response and the first microcomputer;
a second switch arranged along the second bus;
a third bus that connects the second bus between the second switch and the first microcomputer to the memory controller;
a third switch arranged along the third bus; and
a second microcomputer connected to the second bus between the IC card interface terminal and the second switch and connected to the first bus between the first switch and the memory controller, wherein
the semiconductor device has, as operation modes selectable through the control by the second microcomputer, a first mode in which, with the third switch set in a disconnected state and the second switch and the first switch set in a connected state, an operation of the memory controller responding to the memory card command from the memory card interface terminal and an operation of the first microcomputer responding to the IC card command from the IC card interface terminal can be separately performed and a second mode in which, with the first switch and the third switch set in the disconnected state and the second switch set in the connected state, an operation of the first microcomputer responding to the IC card command from the IC card interface terminal can be performed.

2. A semiconductor device according to claim 1, wherein the semiconductor device further has, as an operation mode selectable through the control by the second microcomputer, a third mode in which, with the first switch set in the disconnected state and the second switch and the third switch set in the connected state, the memory controller and the first microcomputer can be actuated in response to an undefined IC card command from the IC card interface terminal.

3. A semiconductor device according to claim 2, wherein the semiconductor device further has, as an operation mode selectable through the control by the second microcomputer, a fourth mode in which, with the second switch set in the disconnected state and the first and third switches set in the connected state, the memory controller and the first microcomputer can be actuated in response to the memory card command from the memory card interface terminal.

4. A semiconductor device according to claim 3, wherein the second microcomputer sets the first mode according to operation power supply to the semiconductor device.

5. A semiconductor device according to claim 3, wherein the second microcomputer sets the second mode according to operation power supply to the semiconductor device.

6. A semiconductor device according to claim 4 or 5, wherein the semiconductor device has a power switch that can selectively interrupt operation power supply to the memory controller, and
the second microcomputer controls the power switch to an OFF state in setting the second mode.

7. A semiconductor device according to claim 4 or 5, wherein the semiconductor device has a power switch that can selectively interrupt operation power supply to the memory controller and the nonvolatile memory, and
the second microcomputer controls the power switch to an OFF state in setting the second mode.

8. A semiconductor device according to claim 4 or 5, wherein
in the first mode or the second mode, the first microcomputer gives a mode change instruction signal to the second microcomputer in response to input of a first IC card command from the second bus, and
the second microcomputer changes the operation mode to the third mode in response to the mode change instruction signal.

9. A semiconductor device according to claim 4 or 5, wherein, in the first mode or the second mode, the second microcomputer monitors a pattern of a first undefined IC card command supplied from the IC card interface terminal to the second bus and, when the first undefined IC card command is supplied from the IC card interface terminal to the second bus a predetermined number of times with respect to an IC card error response returned by the first microcomputer in response to the first undefined IC card command, on condition that a result of monitoring performed the predetermined number of times for the supplied first undefined IC card command coincides with a predetermined pattern, outputs an IC card normal response from the IC card interface terminal to the outside and changes the operation mode to the third mode.

10. A semiconductor device according to claim 8 or 9, wherein, in the third mode, the second microcomputer decodes a second undefined IC card command supplied from the IC card interface terminal to the second bus, issues a first memory card command to the memory card controller, converts a first memory card response returned from the memory controller as a processing result responding to the first memory card command into a predetermined IC card response, and outputs the IC card response to the second bus.

11. A semiconductor device according to claim 8 or 9, wherein, in the third mode, the second microcomputer confirms, in response to input of a third undefined IC card command from the second bus, that the memory controller and the first microcomputer do not cooperatively operate via the third bus and then changes the operation mode to the first mode.

12. A semiconductor device according to claim 4 or 5, wherein
in the first mode or the second mode, the first microcomputer gives a mode change instruction signal to the second microcomputer in response to input of a second IC card command from the second bus, and
the second microcomputer changes the operation mode to the fourth mode in response to the mode change instruction signal.

13. A semiconductor device according to claim 4 or 5, wherein, in the first mode or the second mode, the second microcomputer monitors a pattern of a fourth undefined IC card command supplied from the IC card interface terminal to the second bus and, when the fourth undefined IC card command is supplied from the IC card interface terminal to the second bus a predetermined number of times with respect to a response of an IC card returned by the first microcomputer in response to the fourth undefined IC card command, on condition that a result of monitoring performed the predetermined number of times for the supplied fourth undefined IC card command coincides with a predetermined pattern, outputs an IC card normal response to the second bus and then changes the operation mode to the fourth mode.

14. A semiconductor device according to claim 12 or 13, wherein, in the fourth mode, the memory controller decodes a memory card command supplied from the memory card interface terminal to the first bus, controls access to the nonvolatile memory according to a decoding result, controls, according to the decoding result, access to the nonvolatile memory performed by using response to an IC card command issued to the first microcomputer, and outputs a memory card response to the access control to the first bus.

15. A semiconductor device according to claim 12 or 13, wherein, in the fourth mode, the second microcomputer confirms, in response to input of a fifth undefined IC card command from the second bus, that the memory controller and the first microcomputer do not cooperatively operate via the third bus and then changes the operation mode to the first mode.

16. A semiconductor device according to claim 3, wherein
the semiconductor device has a mode terminal connected to the memory controller and the second microcomputer, and
the second microcomputer sets, when the mode terminal is in a first state, the operation mode in the first mode according to operation power supply to the semiconductor device and sets, when the mode terminal is in a second state, the operation mode in the fourth mode according to operation power supply to the semiconductor device.

17. A semiconductor device according to claim 3, wherein
the nonvolatile memory has a first nonvolatile storage area and a second nonvolatile storage area, and
the memory controller inputs a switch control signal for the third switch, allows access to only the first nonvolatile storage area in a state in which the third switch instructed to be disconnected by the switch control signal, and allows access to the first nonvolatile storage area and the second nonvolatile storage area in a state in which the third switch instructed to be connected by the switch control signal.

18. A semiconductor device according to claim 17, wherein the first nonvolatile storage area is a normal area and the second nonvolatile storage area is a secure area.

19. A semiconductor device according to any one of claims 1 to 3, wherein
the IC card interface terminal includes a 1-bit input and output terminal for IC card, a clock imputer terminal for IC card, and a reset terminal for IC card having terminal positions and terminal functions conforming to ISO/IEC7816-2, and
the memory card interface terminal includes a clock terminal for memory card, a 1-bit command terminal for memory card, and a 1-bit data terminal for memory card allocated to free terminals in the terminal positions and the terminal functions specified by ISO/IEC7816-2.

20. A semiconductor device according to any one of claims 1 to 19, wherein
the semiconductor device includes another interface terminal different from the memory card interface terminal as an external terminal and further includes a conversion circuit that converts the terminal function of the memory card interface terminal into a terminal function of the other interface terminal, and
the conversion circuit is connected to the memory card interface terminal and the other interface terminal.

21. A semiconductor device according to any one of claims 1 to 19, wherein
the semiconductor device includes an RF communication terminal different from the IC card interface terminal as an external terminal and further includes a conversion circuit that converts the terminal function of the IC card interface terminal into a non-contact interface that uses the RF communication terminal, and
the conversion circuit is connected to the IC card interface terminal and the RF communication terminal.

22. A semiconductor device comprising:
an electrically rewritable nonvolatile memory;
a memory controller that controls the nonvolatile memory in response to a memory card command and returns a memory card response;
a first microcomputer that operates in response to an IC card command and returns an IC card response;
a second microcomputer connected to the memory card controller by using a first port;
a first bus that connects a memory card interface terminal used for input and output of the memory card command and the memory card response, the memory controller, and a second port of the second microcomputer;
a first switch that selectively sets the first bus in a disconnected state from the memory card interface terminal;
a second bus that connects an IC card interface terminal used for input and output of the IC card command and the IC card response and a third port of the second microcomputer;
a third bus that connects a fourth port of the second microcomputer and the first microcomputer; and
a second switch that selectively connects the second bus and the third bus, wherein
the semiconductor device has, as operation modes selectable through the control by the second microcomputer, a first mode in which, with the second switch and the first switch set in a connected state, an operation of the memory controller responding to the memory card command from the memory card interface terminal and an operation of the first microcomputer responding to the IC card command from the IC card interface terminal can be separately performed and a second mode in which, with the first switch set in a disconnected state and the second switch set in the connected state, an operation of the first microcomputer responding to the IC card command from the IC card interface terminal can be performed.

23. A semiconductor device according to claim 22, wherein the semiconductor device further has, as an operation mode selectable through the control by the second microcomputer, a third mode in which, with the first switch set in the disconnected state and the second switch set in the connected state, the memory controller and the first microcomputer can be actuated by using the first port, the third port, and the fourth port in response to an undefined IC card command from the IC card interface terminal.

24. A semiconductor device according to claim 23, wherein the semiconductor device further has, as an operation mode selectable through the control by the second microcomputer, a fourth mode in which, with the first switch set in the connected state and the second switch set in the disconnected state, the memory controller and the first microcomputer can be actuated by using the first port and the fourth port in response to the memory card command from the memory card interface terminal.

25. A semiconductor device according to claim 24, wherein the second microcomputer sets the first mode according to operation power supply to the semiconductor device.

26. A semiconductor device according to claim 24, wherein the second microcomputer sets the second mode according to operation power supply to the semiconductor device.

27. A semiconductor device according to claim 25 or 26, wherein
the semiconductor device has a power switch that can selectively interrupt operation power supply to the memory controller, and
the second microcomputer controls the power switch to an OFF state in setting the second mode.

28. A semiconductor device according to claim 25 or 26, wherein
the semiconductor device has a power switch that can selectively interrupt operation power supply to the memory controller and the nonvolatile memory, and
the second microcomputer controls the power switch to an OFF state in setting the second mode.

29. A semiconductor device according to claim 25 or 26, wherein
in the first mode or the second mode, the first microcomputer gives a mode change instruction signal to the second microcomputer in response to input of a first IC card command from the second bus, and
the second microcomputer sets the third mode in response to the mode change instruction signal.

30. A semiconductor device according to claim 25 or 26, wherein, in the first mode or the second mode, the second microcomputer monitors, from the third port, a pattern of a first undefined IC card command supplied from the IC card interface terminal to the second bus and, when the first undefined IC card command is supplied from the IC card interface terminal to the second bus a predetermined number of times with respect to a response of an IC card returned by the first microcomputer in response to the first undefined IC card command, on condition that a result of monitoring performed the predetermined number of times for the supplied first undefined IC card command coincides with a predetermined pattern, outputs an IC card normal response from the third port to the outside via the IC card interface terminal and changes the operation mode to the third mode.

31. A semiconductor device according to claim 29 or 30, wherein in the third mode, the second microcomputer decodes a second undefined IC card command supplied from the IC card interface terminal to the third port via the second bus, issues a first memory card command to the memory card controller, converts a first memory card response returned from the memory controller as a processing result responding to the first memory card command into a predetermined IC card response, and outputs the IC card response from the third port to the second bus.

32. A semiconductor device according to claim 29 or 30, wherein, in the third mode, the second microcomputer confirms, in response to input of a third undefined IC card command from the second bus to the third port, that the memory controller and the first microcomputer do not cooperatively operate via the first port and the fourth port and then changes the operation mode to the first mode.

33. A semiconductor device according to claim 25 or 26, wherein
in the first mode or the second mode, the first microcomputer gives, in response to input of a second IC card command from the second bus, a mode change instruction signal to the second microcomputer, and
the second microcomputer changes the operation mode to the fourth mode in response to the mode change instruction signal.

34. A semiconductor device according to claim 25 or 26, wherein, in the first mode or the second mode, the second microcomputer monitors a pattern of a fourth undefined IC card command supplied from the IC card interface terminal to the third port via the second bus and, when the fourth undefined IC card command is supplied from the IC card interface terminal to the second bus a predetermined number of times with respect to a response of an IC card returned by the first microcomputer in response to the fourth undefined IC card command, on condition that a result of monitoring performed the predetermined number of times for the supplied fourth undefined IC card command coincides with a predetermined pattern, outputs an IC card normal response to the second bus and then changes the operation mode to the fourth mode.

35. A semiconductor device according to claim 33 or 34, wherein, in the fourth mode, the memory controller decodes a memory card command supplied from the memory card interface terminal to the first bus, controls access to the nonvolatile memory according to a decoding result, controls, according to the decoding result, access to the nonvolatile memory performed by using a response to an IC card command issued to the first microcomputer, and outputs a memory card response to the access command to the first bus.

36. A semiconductor device according to claim 33 or 34, wherein, in the fourth mode, the second microcomputer confirms, in response to input of a fifth undefined IC card command from the second bus, that the memory controller and the first microcomputer do not cooperatively operate via the first port and the fourth port and then changes the operation mode to the first mode.

37. A semiconductor device according to claim 24, wherein
the semiconductor device has a mode terminal connected to the second microcomputer, and
the second microcomputer sets, when the mode terminal is in a first state, the operation mode in the first mode according to operation power supply to the semiconductor device and sets, when the mode terminal is in a second state, the operation mode in the fourth mode according to operation power supply to the semiconductor device.

38. A semiconductor device according to claim 24, wherein
the nonvolatile memory has a first nonvolatile storage area and a second nonvolatile storage area, and
the memory controller allows access to only the first nonvolatile storage area in the first mode and the second mode and allows access to the first nonvolatile storage area and the second nonvolatile storage area in the third mode and the fourth mode.

39. A semiconductor device according to claim 38, wherein the first nonvolatile storage area is a normal area and the second nonvolatile storage area is a secure area.

40. A semiconductor device according to any one of claims 22 to 24, wherein
the IC card interface terminal includes a 1-bit input and output terminal for IC card, a clock imputer terminal for IC card, and a reset terminal for IC card having terminal positions and terminal functions conforming to ISO/IEC7816-2, and
the memory card interface terminal includes a clock terminal for memory card, a 1-bit command terminal for memory card, and a 1-bit data terminal for memory card allocated to free terminals in the terminal positions and the terminal functions specified by ISO/IEC7816-2.

41. A semiconductor device according to any one of claims 22 to 40, wherein
the semiconductor device includes another interface terminal different from the memory card interface terminal as an external terminal and further includes a conversion circuit that converts the terminal function of the memory card interface terminal into a terminal function of the other interface terminal, and
the conversion circuit is connected to the memory card interface terminal and the other interface terminal.

42. A semiconductor device according to any one of claims 22 to 40, wherein
the semiconductor device includes an RF communication terminal different from the IC card interface terminal as an external terminal and further includes a conversion circuit that converts the terminal function of the IC card interface terminal into a non-contact interface that uses the RF communication terminal, and
the conversion circuit is connected to the IC card interface terminal and the RF communication terminal.

43. A semiconductor device comprising:
an electrically rewritable nonvolatile memory;
a memory controller that controls the nonvolatile memory in response to a memory card command and returns a memory card response;
a first microcomputer that operates in response to an IC card command and returns an IC card response;
a first bus that connects a memory card interface terminal used for input and output of the memory card command and the memory card response and the memory controller;
a first switch arranged along the first bus;
a second bus that connects an IC card interface terminal used for input and output of the IC card command and the IC card response and the first microcomputer;
a second switch arranged along the second bus;
a second microcomputer connected to the second bus between the IC card interface terminal and the second switch and connected to the first bus between the first switch and the memory controller; and
a third microcomputer connected to the memory controller, wherein
the semiconductor device has, as operation modes selectable through the control by the second microcomputer, a first mode in which, with the first switch and the second switch set in a connected state, an operation of the memory controller responding to the memory card command from the memory card interface terminal and an operation of the first microcomputer responding to the IC card command from the IC card interface terminal can be separately performed and a second mode in which, with the first switch set in a disconnected state and the second switch set in the connected state, an operation of the first microcomputer responding to the IC card command from the IC card interface terminal can be performed.

44. A semiconductor device according to claim 43, wherein the semiconductor device further has, as an operation mode selectable through the control by the second microcomputer, a third mode in which, with the first switch set in the disconnected state and the second switch set in the connected state, the memory controller and the third microcomputer can be actuated in response to an undefined IC card command from the IC card interface terminal using a first port and a second port.

45. A semiconductor device according to claim 44, wherein the semiconductor device further has, as an operation mode selectable through the control by the second microcomputer, a fourth mode in which, with the second switch set in the disconnected state and the first switch set in the connected state, the memory controller and the third microcomputer can be actuated in response to the memory card command from the memory card interface terminal.

46. A semiconductor device according to claim 45, wherein the second microcomputer sets the first mode according to operation power supply to the semiconductor device.

47. A semiconductor device according to claim 45, wherein the second microcomputer sets the second mode according to operation power supply to the semiconductor device.

48. A semiconductor device according to claim 46 or 47, wherein
the semiconductor device has a power switch that can selectively interrupt operation power supply to the memory controller, and
the second microcomputer controls the power switch to an OFF state in setting the second mode.

49. A semiconductor device according to claim 46 or 47, wherein
the semiconductor device has a power switch that can selectively interrupt operation power supply to the memory controller and the nonvolatile memory, and
the second microcomputer controls the power switch to an OFF state in setting the second mode.

50. A semiconductor device according to claim 46 or 47, wherein
in the first mode or the second mode, the first microcomputer gives a mode change instruction signal to the second microcomputer in response to input of a first IC card command from the second bus, and
the second microcomputer changes the operation mode to the third mode in response to the mode change instruction signal.

51. A semiconductor device according to claim 46 or 47, wherein
in the first mode or the second mode, the second microcomputer monitors a pattern of a first undefined IC card command supplied from the IC card interface terminal to the second bus and, when the first undefined IC card command is supplied from the IC card interface terminal to the second bus a predetermined number of times with respect to a response of an IC card returned by the first microcomputer in response to the first undefined IC card command, on condition that a result of monitoring performed the predetermined number of times for the supplied first undefined IC card command coincides with a predetermined pattern, outputs an IC card normal response from the IC card interface terminal to the outside and changes the operation mode to the third mode.

52. A semiconductor device according to claim 50 or 51, wherein, in the third mode, the second microcomputer decodes a second undefined IC card command supplied from the IC card interface terminal to the second bus, issues a first memory card command to the memory card controller, converts a first memory card response returned from the memory controller as a processing result responding to the first memory card command into a predetermined IC card response, and outputs the IC card response to the second bus.

53. A semiconductor device according to claim 50 or 51, wherein, in the third mode, the second microcomputer confirms, in response to input of a third undefined IC card command from the second bus, that the memory controller and the third microcomputer do not cooperatively operate and then changes the operation mode to the first mode.

54. A semiconductor device according to claim 46 or 47, wherein
in the first mode or the second mode, the first microcomputer gives, in response to input of a second IC card command from the second bus, a mode change instruction signal to the second microcomputer, and
the second microcomputer changes the operation mode to the fourth mode in response to the mode change instruction signal.

55. A semiconductor device according to claim 46 or 47, wherein, in the first mode or the second mode, the second microcomputer monitors a pattern of a fourth undefined IC card command supplied from the IC card interface terminal to the second bus and, when the fourth undefined IC card command is supplied from the IC card interface terminal to the second bus a predetermined number of times with respect to a response of an IC card returned by the first microcomputer in response to the fourth undefined IC card command, on condition that a result of monitoring performed the predetermined number of times for the supplied fourth undefined IC card command coincides with a predetermined pattern, outputs an IC card normal response to the second bus and then changes the operation mode to the fourth mode.

56. A semiconductor device according to claim 54 or 55, wherein, in the fourth mode, the memory controller decodes a memory card command supplied from the memory card interface terminal to the first bus, controls access to the nonvolatile memory according to a decoding result, controls, according to the decoding result, access to the nonvolatile memory performed by using a response to an IC card command issued to the third microcomputer, and outputs a memory card response to the access command to the first bus.

57. A semiconductor device according to claim 54 or 55, wherein, in the fourth mode, the second microcomputer confirms, in response to input of a fifth undefined IC card command from the second bus, that the memory controller and the third microcomputer do not cooperatively operate and then changes the operation mode to the first mode.

58. A semiconductor device according to claim 45, wherein
the semiconductor device has a mode terminal connected to the second microcomputer, and
the second microcomputer sets, when the mode terminal is in a first state, the operation mode in the first mode according to operation power supply to the semiconductor device and sets, when the mode terminal is in a second state, the operation mode in the fourth mode according to operation power supply to the semiconductor device.

59. A semiconductor device according to claim 45, wherein
the nonvolatile memory has a first nonvolatile storage area and a second nonvolatile storage area, and
the memory controller allows access to only the first nonvolatile storage area in the first mode and the second mode and allows access to the first nonvolatile storage area and the second nonvolatile storage area in the third mode and the fourth mode.

60. A semiconductor device according to claim 59, wherein the first nonvolatile storage area is a normal area and the second nonvolatile storage area is a secure area.

61. A semiconductor device according to any one of claims 43 to 45, wherein
the IC card interface terminal includes a 1-bit input and output terminal for IC card, a clock imputer terminal for IC card, and a reset terminal for IC card having terminal positions and terminal functions conforming to ISO/IEC7816-2, and
the memory card interface terminal includes a clock terminal for memory card, a 1-bit command terminal for memory card, and a 1-bit data terminal for memory card allocated to free terminals in the terminal positions and the terminal functions specified by ISO/IEC7816-2.

62. A semiconductor device according to any one of claims 43 to 61, wherein
the semiconductor device includes another interface terminal different from the memory card interface terminal as an external terminal and further includes a conversion circuit that converts the terminal function of the memory card interface terminal into a terminal function of the other interface terminal, and
the conversion circuit is connected to the memory card interface terminal and the other interface terminal.

63. A semiconductor device according to any one of claims 43 to 61, wherein
the semiconductor device includes an RF communication terminal different from the IC card interface terminal as an external terminal and further includes a conversion circuit that converts the terminal function of the IC card interface terminal into a non-contact interface that uses the RF communication terminal, and
the conversion circuit is connected to the IC card interface terminal and the RF communication terminal.
